# EUROPÄISCHE PATENTSCHRIFT

(11) **EP 2 792 277 B1**
(45) Veröffentlichungstag und Bekanntmachung des Hinweises auf die Patenterteilung: **05.10.2016**
(21) Anmeldenummer: 14001328.5
(22) Anmeldetag: 11.04.2014
(51) Int. Cl.: A47C 20/04, A47C 20/08

(54) **ELEKTROMOTORISCHER MÖBELANTRIEB**
ELECTRIC MOTOR FURNITURE DRIVE
ENTRAÎNEMENT DE MEUBLE À MOTEUR ÉLECTRIQUE

(30) Priorität: 18.04.2013 DE 102013006640; 09.08.2013 DE 202013007106 U
(43) Veröffentlichungstag der Anmeldung: 22.10.2014
(73) Patentinhaber: Deon Group AG, 8002 Zürich (CH)
(72) Erfinder: Dewert, Eckhart, 8638 Goldingen (CH); Henle, Jörg, 97990 Weikersheim (DE)
(74) Vertreter: Wagner, Carsten

(56) Entgegenhaltungen:
- CH-A- 379 075
- DE-A1-102008 028 586

## Beschreibung

Die Erfindung betrifft einen elektromotorischen Möbelantrieb zum Verstellen von Teilen eines Möbels relativ zueinander.

Zur Verstellung beispielsweise von Lattenrosten sind sogenannte Doppelantriebe bekannt, die ein als separates, mit dem Lattenrost verbindbares Bauteil ausgebildetes Gehäuse aufweisen, in dem zwei Verstelleinheiten aufgenommen sind, von denen die eine beispielsweise zur Verstellung eines Rückenstützteiles und die andere zur Verstellung eines Beinstützteiles des Lattenrostes dient. Die Verstelleinheiten sind bei den bekannten Doppelantrieben als Spindelantrieb ausgebildet, wobei die antriebstechnische Ankopplung an ein zu verstellendes Stützteil über einen Anlenkhebel erfolgt, der drehfest mit einer Schwenkwelle verbunden ist, die dem zu verstellenden Stützteil zugeordnet ist. Zum Verstellen des Stützteiles drückt die Spindelmutter des Spindeltriebes gegen den Anlenkhebel, so dass die Schwenkwelle und damit das Stützteil verschwenkt. Derartige Doppelantriebe sind beispielsweise durch EP 0372032 A1 und DE 3842078 A1 bekannt.

Durch DE 10017989 C2 und DE 10017979 C2 ist jeweils ein als Doppelantrieb ausgebildeter Möbelantrieb bekannt, bei dem jede Verstelleinheit eine elektromotorisch angetriebene Aufwickelvorrichtung für ein seil-, band- oder kettenförmiges Zugmittel aufweist, das nach Art eines Flaschenzuges mit einem Schwenkhebel verbunden ist, der drehfest mit einer Schwenkwelle verbunden ist, die ihrerseits mit einem zu verstellenden Stützteil in Wirkungsverbindung steht.

Nach einem ähnlichen Wirkungsprinzip arbeitende Möbelantriebe sind auch durch DE 3409223 C2, DE 19843259 C1 und EP 1020171 A1 bekannt.

Nach unterschiedlichen Wirkungsprinzipien arbeitende Doppelantriebe sind ferner durch DE 197292812 A1, DE 29811566 U1 und DE 29714746 U1 bekannt.

Durch DE 3900384 ist ein verstellbarer Lattenrost bekannt, bei dem die Verstellung eines Kopf- oder Beinstützteiles des Lattenrostes mittels eines Pneumatikzylinders erfolgt.

Durch DE 29602947 U1 ist ein Gasfederverstellbeschlag für Lattenroste bekannt, wobei zum Betätigen der Gasfeder ein Seilzug vorgesehen ist.

Durch DE 3103922 A1 ist ein Lattenrost bekannt, bei dem die Verstellung beispielsweise eines Oberkörperstützteiles über einen Scheibenwischermotor und eine Hubschere erfolgt.

Durch EP 1294255 B1 ist ein Doppelantrieb bekannt, bei dem die Kraftübertragung von einem linear beweglichen Antriebselement auf einen Schwenkhebel, der mit einer mit einem zu verstellenden Stützteil in Wirkungsverbindung stehende Schwenkwelle in Wirkungsverbindung steht, über einen Flaschenzug erfolgt. Ähnliche Möbelantriebe sind auch durch FR 2727296, DE 3409223 C2, DE 19843259 C1, GB 2334435 und US 5528948 bekannt.

Darüber hinaus sind Lattenroste bekannt, bei denen die Verstelleinrichtung zur Verstellung eines Stützteiles teilweise oder vollständig in einen Grundkörper des Lattenrostes integriert ist. In diesem Sinne zeigt und beschreibt DE 19962541 C2 (entsprechend EP 1239755 B1, JP 2001-546280 und US 6754922) eine motorisch verstellbare Stützeinrichtung, die ein zueinander parallele Längsholme aufweisendes erstes Stützteil aufweist, das bei der aus der Druckschrift bekannten Stützeinrichtung durch ein ortsfestes mittleres Stützteil gebildet ist. Die bekannte Stützeinrichtung weist ferner weitere Stützteile auf, die durch Antriebsmittel relativ zu dem ersten Stützteil verstellbar sind. Bei der aus der Druckschrift bekannten Stützeinrichtung ist ein erster Längsholm des ersten Stützteiles zur Aufnahme der Antriebsmittel als Hohlprofil ausgebildet, wobei der gesamte Antrieb einschließlich eines Antriebsmotors in dem hohlen Längsholm aufgenommen ist. Aufgrunddessen steht der Antriebsmotor in Vertikalrichtung des ersten Längsholmes nicht über denselben hervor, so dass die aus der Druckschrift bekannte Stützeinrichtung eine äußerst geringe Bauhöhe aufweist. Eine ähnliche Stützeinrichtungist auch durch DE 10046751 (entsprechend EP 1239754 B1, JP 2001-547994 und US 6961971) bekannt.

Durch WO 96/29970 ist eine motorisch verstellbare Stützeinrichtung für eine Matratze eines Bettes bekannt, die mehrere in Längsrichtung der Stützeinrichtung aufeinanderfolgende Stützteile aufweist, die durch Antriebsmittel relativ zu einem ersten Stützteil verschwenkbar sind. Die Stützteile sind an einem äußeren Rahmen gelagert, dessen Profilhöhe wesentlich größer ist als die Profilhöhe der Stützteile. Bei der aus der Druckschrift bekannten Stützeinrichtung sind Teile des äußeren Rahmens als Hohlprofil ausgebildet, wobei in dem Hohlprofil Teile des Antriebsmittels zur Vestellung der Stützteile relativ zueinander aufgenommen sind. Der Antriebsmotor ist an einer Innenseite eines Teiles des äußeren Rahmens angeordnet.

Durch DE 69507158 T2 (entsprechend EP 0788325 B1) ist eine motorisch verstellbare Stützeinrichtung für eine Matratze eines Bettes bekannt, die ein einen Längsholm aufweisendes erstes Stützteil und wenigstens ein zweites Stützteil aufweist, das durch Antriebsmittel relativ zu dem ersten Stützteil verschwenkbar ist. Bei der bekannten Stützeinrichtung ist der Antriebsmotor außerhalb der Grundfläche der Stützeinrichtung angeordnet und an einer rahmenartigen Verlängerung des ersten Stützteiles befestigt.

Durch EP 1633219 B1 ist ein Lattenrost bekannt, bei der in einem hohlen Längsholm Teile der Verstelleinrichtung aufgenommen sind, während der Antriebsmotor außerhalb des Längsholmes angeordnet ist und durch eine Ausnehmung hindurch mit den in dem Längsholm aufgenommenen Teilen der Verstelleinrichtung in Antriebsverbindung steht.

Durch WO 2008/113401 ist ein zum Verstellen einer Schublade relativ zu einem Korpus eines Schrankes vorgesehener Möbelantrieb bekannt, bei dem die Verstellung der Schublade über eine biegsame Zahnstange erfolgt, die in Eingriff mit einem Zahnrad steht.

Durch DE 10 2008 028586 A1 ist ein Lattenrost mit integrierter Verstelleinrichtung bekannt, bei dem die Kraftübertragung von Antriebsmotoren der Verstelleinrichtung auf die zu verstellenden Stützteile über Zugseile erfolgt, die über Umlenkungen geführt sind.

Der Erfindung liegt die Aufgabe zugrunde, einen elektromotorischen Möbelantrieb zum Verstellen von Teilen eines Möbels relativ zueinander anzugeben, der einfach im Aufbau und kompakt ist.

Diese Aufgabe wird durch die im Anspruch 1 angegebene Erfindung gelöst.

Der Grundgedanke der Erfindung besteht darin, die Kraftübertragung von einer elektromotorischen Antriebseinheit, die beispielsweise zum Verstellen von Stützteilen eines Lattenrostes relativ zueinander dient, auf das zu verstellende Stützteil über einen Bowdenzug mit einem Zugseil und einer Ummantelung zu bewirken. Die Erfindung löst sich damit von den bisher beispielsweise bei Lattenrosten bekannten Konzepten der Kraftübertragung und stellt das aus anderen technischen Bereichen, beispielsweise von Bremsen und Gangschaltungen von Fahrrädern, Gas- und Kupplungszügen bei Motorrädern und aus der KFZ-Technik bekannte Prinzip eines Bowdenzuges für Möbelantriebe bereit.

Daraus ergeben sich wesentliche technische Vorteile.

Ein besonderer Vorteil der Erfindung besteht darin, dass sich hinsichtlich der Anordnung eines Antriebsmotors relativ zu einem zu verstellenden Stützteil oder anderem Bauteil weitgehende Freiheiten ergeben, indem der Antriebsmotor bei Verwendung eines Bowdenzuges entsprechender Länge an nahezu beliebiger Stelle des Möbels angeordnet werden kann.

Ein weiterer Vorteil der Erfindung besteht darin, dass aufgrund der weitgehenden Freiheiten hinsichtlich der Positionierung des Antriebsmotors bzw. der Antriebsmotoren besonders flach bauende Verstelleinrichtungen realisiert werden können.

Beispielsweise und insbesondere können sämtliche Antriebsmotoren, die zur Verstellung eines Lattenrostes benötigt werden, in einem flachen Gehäuse untergebracht sein, das an einer beliebigen geeigneten Stelle beispielsweise eines Lattenrostes befestigt oder einfach auf den Boden unterhalb des Lattenrostes gelegt werden kann.

Die Freiheiten hinsichtlich der Anordnung von Antriebsmotoren sind dadurch noch erhöht, dass Bowdenzüge auch in erheblichen Maße gebogen verlegt werden können, ohne ihre Kraftübertragungsfunktion zu beeinträchtigen.

Ein weiterer Vorteil der Erfindung besteht darin, dass Bowdenzüge als relativ einfache und kostengünstige wie auch robuste Standardbauteile zur Verfügung stehen.

Es hat sich überraschend gezeigt, dass Bowdenzüge, beispielsweise in Kombination mit Wickelvorrichtungen oder Spindeltrieben, ohne weiteres geeignet sind, die beispielsweise bei Verstellung von Stützteilen eines Lattenrostes unter der Belastung einer auf dem Lattenrost ruhenden Person erforderlichen Kräfte aufzubringen.

Aus der DE 29811566 U1 ist bereits die Verwendung eines Bowdenzuges bei einem Möbelantrieb bekannt, allerdings ausschließlich im Zusammenhang mit der Ausrückung des Möbelantriebs und damit im Zusammenhang mit einer Anwendung, bei der sehr viel geringere Kräfte auftreten als bei der Verstellung von Stützteilen eines Lattenrostes.

Ein weiterer Vorteil der Erfindung besteht darin, dass unter Verwendung der gleichen Bowdenzüge unterschiedlich breite Lattenroste realisiert werden können. Während bei einem breiteren Lattenrost der Bowdenzug direkter von dem zugeordneten Zugelement zu dem zu verstellenden Stützteil geführt werden kann, kann er bei einem schmaleren Lattenrost in einem Bogen zu dem zu verstellenden Stützteil geführt werden. In beiden Fällen kann jedoch der gleiche Bowdenzug verwendet werden. Durch die Verwendung von Gleichteilen ist damit die Herstellung von Lattenrosten unterschiedlicher Breite besonders einfach und kostengünstig gestaltet.

Die Anzahl der Elektromotoren, Zugeinheiten, Zugelemente und Bowdenzüge ist entsprechend den jeweiligen Anforderungen innerhalb weiter Grenzen wählbar.

Erfindungsgemäß ist eine Antriebseinheit vorgesehen, die wenigstens einen Elektromotor aufweist und mit wenigstens einer Zugeinheit in Antriebsverbindung steht. Dabei sind der oder jeder Zugeinheit wenigstens zwei Bowdenzüge zugeordnet, deren Zugseile jeweils mit der zugeordneten Zugeinheit in Wirkungsverbindung (Zugverbindung) stehen. Aufgrund der Zuordnung zu derselben Zugeinheit werden also die der Zugeinheit zugeordneten Bowdenzüge gleichzeitig betätigt. Bei der Verstellung von Lattenrosten kann es zur Vermeidung von Verwindungen eines Stützteiles erforderlich sein, in die beiden seitlich zueinander beabstandeten Längsholme des Stützteiles gleichzeitig eine Verstellkraft einzuleiten. Hierzu können erfindungsgemäß die einer Zugeinheit zugeordneten Bowdenzüge verwendet werden, von denen der eine dem einen Längsholm und der andere dem anderen Längsholm zugeordnet wird. Da die Bowdenzüge gleichzeitig betätigt werden, wird die Verstellkraft dann synchron in beide Längsholme eingeleitet, so dass auf diese Weise eine Synchronisierung erzielt ist, durch die Verwindungen des Stützteiles zuverlässig vermieden sind. Andere Synchronisierungsmaßnahmen, sei es auf elektrischem Wege oder über Torsionswellen, sind damit nicht mehr erforderlich.

Erfindungsgemäß sind die Zugeinheit oder die Zugeinheiten vorzugsweise in einem Gehäuse aufgenommen, das als flache und kompakte Baueinheit ausgeführt werden kann. Das Gehäuse weist vorzugsweise wenigstens eine Ausnehmung auf, durch die die Zugseile der Bowdenzüge zu der Zugeinheit bzw. den Zugeinheiten geführt oder führbar sind. Die Ummantelungen der Bowdenzüge sind an dem Gehäuse festgelegt oder festlegbar.

Beispielsweise kann der erfindungsgemäße elektromotorische Möbelantrieb einen Elektromotor aufweisen, der mit zwei Zugeinheiten in Antriebsverbindung steht. Auf diese Weise ist ein Doppelantrieb realisiert, wobei die eine Zugeinheit beispielsweise zum Verstellen eines Beinstützteiles und die andere zum Verstellen eines Oberkörperstützteiles eines Lattenrostes verwendet werden kann. Im einfachsten Fall werden beide Zugeinheiten von dem Elektromotor simultan betätigt, so dass das Rückenstützteil und das Oberkörperstützteil des Lattenrostes dementsprechend simultan verstellt werden. Es ist erfindungsgemäß in einer solchen Konstellation auch möglich, hinsichtlich der Verstellung des Rückenstützteiles und des Beinstützteiles einen zeitlichen Versatz zu erzeugen, beispielsweise, indem eine der Zugeinheiten einen gewissen Tothub aufweist, währenddessen noch keine Verstellung des zugeordneten Stützteiles erfolgt.

Um wenigstens zwei Stützteile oder andere Möbelbauteile völlig unabhängig voneinander zu verstellen, kann die Antriebseinheit wenigstens zwei Elektromotoren aufweisen, von denen der eine einer Zugeinheit und der andere einer anderen Zugeinheit zugeordnet ist.

Falls besonders große Verstellkräfte aufzubringen sind, ist es erfindungsgemäß auch möglich, zwei oder mehrere Elektromotoren vorzusehen, die derselben Zugeinheit zugeordnet sind und mit derselben in Antriebsverbindung stehen. Auf diese Weise ist gegenüber der Verwendung von einem einzelnen, einer Zugeinheit zugeordneten Elektromotor die aufbringbare Verstellkraft vergrößert.

Falls entsprechend den jeweiligen Anforderungen wünschenswert oder erforderlich, kann erfindungsgemäß ein Möbelantrieb auch mehr als zwei Elektromotoren aufweisen, wobei in der oben beschriebenen Weise jeder Zugeinheit ein Elektromotor oder wenigstens einer Zugeinheit wenigstens zwei Elektromotoren zugeordnet sein können.

Im einfachsten Falle weist der erfindungsgemäße Möbelantrieb einen Elektromotor auf, der mit einem einzelnen Zugeinheit in Kraftübertragungsverbindung steht. Auf diese Weise ist ein Einzelantrieb realisiert, dessen beide der Zugeinheit zugeordneten Bowdenzüge verwendet werden können, um entsprechend den jeweiligen Anforderungen an zwei unterschiedlichen Kraftangriffspunkten eine Verstellkraft in das zu verstellende Bauteil einzuleiten.

Im Möbelbereich ist der erfindungsgemäße Möbelantrieb zum Verstellen beliebiger Möbelbauteile geeignet. Beispielsweise ist der erfindungsgemäße Möbelantrieb zum Verstellen von beliebigen Sitz- oder Liegemöbeln, beispielsweise Lattenrosten oder Sesseln geeignet. Beispielsweise ist der erfindungsgemäße Möbelantrieb auch zur Verstellung von Kranken- bzw. Pflegebetten und Tischen geeignet. Falls beispielsweise eine Tischhöhenverstellung über zwei simultan betätigbare Hubsäulen erfolgen soll, kann ein erfindungsgemäßer Möbelantrieb verwendet werden, wobei zwei Zugelemente des erfindungsgemäßen Möbelantriebs synchron durch denselben Elektromotor angesteuert werden und wobei jeder Hubsäule des Tisches ein Zugelement zugeordnet wird.

Die Erfindung stellt damit erstmals einen elektromotorischen Universal-Möbelantrieb zur Verfügung, der bei gleichem Aufbau für die Verstellung unterschiedlichster Möbel bzw. Möbelbauteile geeignet ist.

Die Zugeleinheiten bzw. die Zugeinheit des erfindungsgemäßen Möbelantriebs, der nachfolgend auch kurz als Antrieb bezeichnet wird, können bzw. kann in beliebiger geeigneter Weise ausgebildet sein. Ihre Funktion, nämlich zur Verstellung eines Bauteiles an dem Zugseil des Bowdenzuges zu ziehen, können Sie entsprechend einer beliebigen geeigneten Kinematik ausführen. In diesem Sinne wird erfindungsgemäß unter einer Zugeinheit eine Anordnung verstanden, das geeignet ist, an dem Zugseil eines Bowdenzuges zu ziehen. Beispielsweise kann das Zugelement als Wickelvorrichtung oder dergleichen ausgebildet sein.

Eine vorteilhafte Weiterbildung der Erfindung sieht vor, dass jede Zugeinheit wenigstens zwei Zugelemente aufweist, von denen jedes einem Zugseil eines Bowdenzuges zugeordnet ist.

Um das Zugelement besonders einfach auszugestalten, sieht eine vorteilhafte Weiterbildung der Erfindung vor, dass wenigstens ein Zugelement in oder an dem Gehäuse linear beweglich gelagert ist.

Eine Führung für ein Zugelement kann als separates, mit dem Gehäuse des Antriebs verbindbares Bauteil ausgebildet sein. Um den Aufbau des erfindungsgemäßen Antriebs weiter zu vereinfachen, sieht eine vorteilhafte Weiterbildung der Erfindung vor, dass wenigstens eine Führung für wenigstens ein Zugelement in das Gehäuse integriert, insbesondere einstückig in das Gehäuse eingeformt ist. In besonders vorteilhafter Weise kann das Gehäuse beispielsweise als Spritzgussteil ausgebildet sein, in das die Führung bzw. die Führungen eingeformt ist bzw. sind.

Dementsprechend sieht eine andere vorteilhafte Weiterbildung der Erfindung vor, dass das Gehäuse wenigstens teilweise aus Kunststoff besteht.

Bei der Ausführungsform mit dem linear beweglichen Zugelement ist die Führung zweckmäßigerweise eine Linearführung, wie dies eine andere Weiterbildung der Erfindung vorsieht.

Eine vorteilhafte Weiterbildung der vorgenannten Ausführungsform sieht vor, dass die zwei Zugelementen zugeordneten Linearführungen zueinander parallel oder annähernd parallel verlaufen.

Um die Stabilität des Gehäuses im Bereich der Führung zu verbessern, also in einem Bereich, in dem bei Betrieb des Möbelantriebs hohe Reaktionskräfte auftreten können, sieht eine andere vorteilhafte Weiterbildung der Erfindung vor, dass das Gehäuse im Bereich der Führung wenigstens abschnittsweise doppelwandig ausgebildet ist.

Eine andere vorteilhafte Weiterbildung der Erfindung sieht vor, dass das Gehäuse wenigstens aus zwei Halbschalen besteht. Bei dieser Ausführungsform ist das Gehäuse besonders einfach aufgebaut. Die Montage des erfindungsgemäßen Möbelantriebes kann beispielsweise so erfolgen, dass die Bestandteile des Möbelantriebs in eine Halbschale eingesetzt oder eingelegt und durch Aufsetzen der anderen Halbschale zwischen den Halbschalen formschlüssig aufgenommen und ggf. fixiert werden können.

Die Festlegung der Ummantelung eines Bowdenzuges an dem Gehäuse des Antriebs kann auf beliebige Art und Weise erfolgen. Vorteilhaft ist hierbei eine formschlüssige Verbindung zwischen der Ummantelung des Bowdenzuges und dem Gehäuse, so dass auch beim Aufbringen großer Verstellkräfte eine verschiebefeste Verbindung zwischen der Ummantelung des Bowdenzuges und dem Gehäuse sichergestellt ist. Hierzu sieht eine vorteilhafte Weiterbildung der Erfindung vor, dass wenigstens ein Bowdenzug einen mit seiner Ummantelung verschiebefest verbundenen Flansch aufweist. Dieser Flansch kann formschlüssig an dem Gehäuse des Möbelantriebs festgelegt werden, so dass in der gewünschten Weise eine verschiebefeste Verbindung zwischen der Ummantelung des Bowdenzuges und dem Gehäuse erzielt ist.

Grundsätzlich ist es erfindungsgemäß ausreichend, wenn die Antriebseinheit einen einzelnen Elektromotor aufweist, der in der oben beschriebenen Weise jedes Zugelement ansteuert bzw. mit einer Verstellkraft beaufschlagt. Um hinsichtlich der zu erzielenden Verstellfunktion eine höhere Flexibilität zu erzielen, sieht eine vorteilhafte Weiterbildung der Erfindung vor, dass die Antriebseinheit wenigstens zwei Elektromotoren aufweist.

In diesem Zusammenhang sieht eine andere vorteilhafte Weiterbildung der Erfindung vor, dass wenigstens zwei Elektromotoren unabhängig voneinander ansteuerbar sind. Aufgrund der unabhängig voneinander ansteuerbaren Elektromotoren ist es erfindungsgemäß beispielsweise möglich, zwei Zugelemente und damit zwei Möbelbauteile unabhängig voneinander zu verstellen.

Eine andere vorteilhafte Weiterbildung der Erfindung sieht vor, dass jedem Zugelement wenigstens ein Elektromotor zugeordnet ist und mit demselben in Antriebsverbindung steht.

Im Hinblick auf die räumliche Anordnung von mehr als zwei Elektromotoren an dem Gehäuse sieht eine außerordentlich vorteilhafte Weiterbildung vor, dass die Elektromotoren derart zueinander angeordnet sind, dass ihre Abtriebswellen einander zugewandt sind. Auf diese Weise ergibt sich ein besonders kompakter und raumsparender Aufbau.

Der Elektromotor bzw. die Elektromotoren kann bzw. können in beliebiger geeigneter Weise mit dem Gehäuse verbunden sein bzw. werden. In diesem Zusammenhang sieht eine vorteilhafte Weiterbildung der Erfindung vor, dass das Gehäuse derart geformt ist, dass wenigstens ein Elektromotor in das Gehäuse einlegbar und in der Einlegeposition formschlüssig von dem Gehäuse gehalten ist. Auf diese Weise erübrigt sich eine darüber hinausgehende Befestigung des Elektromotors an dem Gehäuse, was Zeit und damit Montagekosten spart. Beispielsweise und insbesondere können Halbschalen des Gehäuses so geformt sein, dass sie im Montagezustand den Elektromotor formschlüssig zwischen sich halten. Mit anderen Worten kann bei dieser Ausführungsform der Elektromotor dadurch montiert werden, dass er in eine Halbschale eingelegt und darin anschließend ein Gehäuse durch Aufsetzen der anderen Halbschale formschlüssig fixiert wird.

Eine andere vorteilhafte Weiterbildung der Erfindung sieht vor, dass die Antriebseinheit wenigstens ein Getriebe aufweist, dessen Bestandteile an einem Getriebe-Halteteil angeordnet sind, insbesondere an demselben gehalten sind. Das Getriebe-Halteteil kann beispielsweise winkelartig, also als sogenannter Getriebewinkel ausgebildet sein und die Bestandteile des Getriebes halten. Falls beispielsweise die Antriebseinheit zwei Elektromotoren aufweist, kann das Getriebe-Halteteil so ausgebildet sein, dass es die beiden Getriebe, die jeweils einem Elektromotor zugeordnet sind, hält.

Um die Montage des erfindungsgemäßen Antriebs weiter zu vereinfachen, sieht eine vorteilhafte Weiterbildung dieser Ausführungsform vor, dass wenigstens ein Elektromotor an dem Getriebe-Halteteil befestigt ist und mit dem Getriebe-Halteteil eine Motor/Getriebe-Baugruppe bildet. Insbesondere kann das Gehäuse des Elektromotors mit dem Getriebe-Halteteil verschraubt werden.

Eine besonders vorteilhafte Weiterbildung der vorgenannten Ausführungsform sieht vor, dass das Gehäuse so geformt ist, dass die Motor/Getriebe-Baugruppe in das Gehäuse einlegbar und in der Einlegeposition formschlüssig von dem Gehäuse gehalten ist. Auf diese Weise ist die Montage des erfindungsgemäßen Antriebs weiter vereinfacht. Beispielsweise kann die Motor/Getriebe-Baugruppe in eine Halbschale des Gehäuses eingelegt und mittels der anderen Halbschale fixiert werden. Die Halbschalen können dann miteinander verbunden, beispielsweise verschraubt werden. Auf diese Weise ergibt sich eine besonders einfache Montage.

Eine Endabschaltung in Endlagen eines Zugelementes und damit in Endlagen einer durch dieses Zugelement bewirkten Verstellbewegung kann auf beliebige geeignete Weise erfolgen, beispielsweise durch eine Erfassung des Motorstromes, der beim Erreichen einer Endlage stark ansteigt. Insoweit sieht eine vorteilhafte Weiterbildung der Erfindung vor, dass einem Zugelement wenigstens ein Endlagenschalter zugeordnet ist. Entsprechende Endlagenschalter, die auch als Endschalter bezeichnet werden, stehen als robuste und kostengünstige Standardbauteile zur Verfügung.

Jeder Endlagenschalter kann auf beliebige geeignete Weise mit dem Gehäuse verbunden werden, beispielsweise in das Gehäuse eingeklebt werden. Insofern sieht eine vorteilhafte Weiterbildung der Erfindung vor, dass das Gehäuse wenigstens eine Halteeinrichtung zum Halten des Endlagenschalters aufweist. Beispielsweise kann die Halteeinrichtung in das Gehäuse eingeformte Zapfen aufweisen, auf die der Endlagenschalter mit Ausnehmungen aufgesetzt wird, die in seinem Gehäuse gebildet sind.

Um die Endlage verändern und entsprechend den jeweiligen Anforderungen wählen zu können, sieht eine vorteilhafte Weiterbildung der vorgenannten Ausführungsform vor, dass das Gehäuse eine Mehrzahl von Halteeinrichtungen entsprechend verschiedenen Schaltpositionen des Endlagenschalters aufweist.

Das oder jedes Zugelement des erfindungsgemäßen Antriebs kann auf beliebige geeignete Weise ausgestaltet sein. Insoweit sieht eine vorteilhafte Weiterbildung der Erfindung vor, dass das oder jedes Zugelement eine Spindelmutter eines Spindeltriebs ist, die verdrehsicher und in Axialrichtung beweglich auf einer Gewindespindel angeordnet ist, die mit der Antriebseinheit in Drehantriebsverbindung steht. Entsprechende Spindeltriebe stehen als einfache und kostengünstige Standardbauteile zur Verfügung. Sie sind robust und zur Aufbringung großer Verstellkräfte geeignet.

In kinematischer Umkehrung der vorgenannten Ausführungsform kann auch wenigstens ein Zugelement eine Gewindespindel sein, die verdrehsicher geführt ist und auf der eine ortsfeste Spindelmutter angeordnet ist, die mit einem Elektromotor in Drehantriebverbindung steht.

Eine außerordentlich vorteilhafte Weiterbildung der Erfindung sieht vor, dass wenigstens ein Zugelement als Wickelvorrichtung zum Aufwickeln des Zugseiles eines Bowdenzuges ausgebildet ist. Bei dieser Ausführungsform wird auf das Zugseil des Bowdenzuges dadurch eine Zugkraft ausgeübt, dass das Zugseil aufgewickelt wird. Auf diese Weise ergibt sich ein kompakter und platzsparender Aufbau. Ein weiterer Vorteil dieser Ausführungsform besteht darin, dass entsprechende Wikkelvorrichtungen als einfache, kostengünstige und robuste Bauteile zur Verfügung stehen und zum Aufbringen großer Kräfte geeignet sind.

Eine vorteilhafte Weiterbildung der vorgenannten Ausführungsform sieht vor, dass wenigstens eine Zugeinheit zwei Wickelvorrichtungen aufweist, von denen die eine dem einen der der Zugeinheit zugeordneten Bowdenzüge und die andere dem anderen der der Zugeinheit zugeordneten Bowdenzüge zugeordnet sind. Bei dieser Ausführungsform werden die beiden (oder wenigstens zwei) einer Zugeinheit zugeordneten Zugseile über die Wickelvorrichtungen aufgewickelt, um eine Verstellkraft aufzubringen.

Entsprechend den jeweiligen Anforderungen kann eine Zugeinheit auch mehr als zwei Wickelvorrichtungen aufweisen, so dass entsprechend der Anzahl an vorgesehenden Wickelvorrichtungen auch mehr als zwei Zugseile von Bowdenzüge aufgewickelt werden können.

Eine vorteilhafte Weiterbildung der Ausführungsform mit wenigstens zwei Wickelvorrichtungen sieht vor, dass die einer Zugeinheit zugeordneten Wickelvorrichtungen drehsynchronisiert sind. Auf diese Weise ist sichergestellt, dass synchron an den beiden Zugseilen der einer Zugeinheit zugeordneten Bowdenzügen gezogen wird. Falls entsprechend den jeweiligen Anforderungen erforderlich, ist es erfindungsgemäß auch möglich, einer Zugeinheit nur einen Bowdenzug zuzuordnen.

Eine erfindungsgemäße elektromotorisch verstellbare Stützeinrichtung zur Abstützung einer Polsterung eines Sitz- oder Liegemöbels, insbesondere einer Matratze eines Bettes, ist im Anspruch 14 angegeben. Die Stützeinrichtung weist wenigstens zwei relativ zueinander verstellbare Stützteile auf, wobei wenigstens ein zu verstellendes Stützteil einen ersten Längsholm und einen zweiten Längsholm aufweist, wobei der erste und der zweite Längsholm quer zur Längsrichtung der Stützeinrichtung zueinander beabstandet sind. Erfindungsgemäß weist die Stützeinrichtung wenigstens einen erfindungsgemäßen Möbelantrieb auf, wobei ein erster der einer Zugeinheit zugeordneten Bowdenzüge mit dem ersten Längsholm und der zweite einer Zugeinheit zugeordneten Bowdenzüge mit dem zweiten Längsholm in Kraftübertragungsverbindung steht. Auf diese Weise ist sichergestellt, dass bei der Verstellung des Stützteiles in beide Längsholme des Stützteiles eine gleichmäßige Verstellkraft eingeleitet wird, so dass Verbindungen des Stützteiles bei seiner Verstellung zuverlässig vermieden sind.

Im Anspruch 15 ist eine Verwendung eines erfindungsgemäßen Möbelantriebs zum Verstellen eines ersten Bauteiles, insbesondere Möbelbauteiles, relativ zu einem zweiten Bauteil, insbesondere Möbelbauteil, vorgesehen, wobei die Zugseile der einer Zugeinheit zugeordneten Bowdenzüge an den räumlich zueinander beabstandeten Stellen an dem ersten Bauteil zum Verstellen desselben festgelegt sind.

Die Erfindung wird nachfolgend unter Bezugnahme auf die beigefügte schematisierte Zeichnung anhand von Ausführungsbeispielen näher erläutert. Dabei bilden alle beschriebenen, in der Zeichnung dargestellten und in den Patentansprüchen beanspruchten Merkmale für sich genommen sowie in beliebiger geeigneter Kombination miteinander den Gegenstand der Erfindung, unabhängig von ihrer Zusammenfassung in den Patentansprüchen und deren Rückbeziehung sowie unabhängig von ihrer Beschreibung bzw. Darstellung in der Zeichnung.

Es zeigt:
- FIG. 1: eine schematische Perspektivansicht eines mit einem ersten Ausführungsbeispiel 1 eines erfindungsgemäßen Möbelantriebes versehenen Lattenrostes in einer maximal verstellten Position,
- FIG. 2: in gleicher Darstellung wie Figur 1 den Lattenrost gemäß Figur 1 in einer unverstellten Position,
- FIG. 3: in gegenüber Figur 1 vergrößertem Maßstab eine Schnittansicht eines Gehäuses des Möbelantriebs gemäß Figur 1,
- FIG. 4: in gegenüber Figur 1 stark vergrößertem Maßstab einer Einzelheit im Bereich eines Gehäuses des Möbelantriebs gemäß Figur 1, wobei das Gehäuse aus Darstellungsgründen offen dargestellt ist,
- FIG. 5: in ähnlicher Darstellung wie Figur 4 eine Einzelheit im Bereich einer Schwenkachse zwischen zwei Stützteilen des Lattenrostes gemäß Figur 1
- FIG. 6: in gleicher Darstellung wie Figur 1 einen Lattenrost, der mit einem zweiten Ausführungsbeispiel eines erfindungsgemäßen Möbelantriebs versehen ist, in seiner maximal verstellten Position,
- FIG. 7: in gleicher Darstellung wie Figur 6 den Lattenrost gemäß Figur 6 in einer unverstellten Position,
- FIG. 8: in gegenüber Figur 6 vergrößertem Maßstab das zweite Ausführungsbeispiel des erfindungsgemäßen Möbelantriebs in einer Perspektivansicht,
- FIG. 9: den Möbelantrieb gemäß Figur 8 in zu Figur 8 entsprechender Darstellung bei geöffnetem Gehäuse,
- FIG. 10: in zu Figur 9 entsprechender Darstellung eine weitere Perspektivansicht des zweiten Ausführungsbeispieles des erfindungsgemäßen Möbelantriebs,
- FIG. 11: den Möbelantrieb gemäß Figur 9 in zu Figur 9 entsprechender Darstellung, wobei ein Getriebehalteteil weggelassen ist,
- FIG. 12: in zu Figur 11 entsprechender Darstellung den Möbelantrieb gemäß Figur 11, wobei zusätzlich ein Elektromotor weggelassen ist,
- FIG. 13: in zu Figur 8 entsprechender Darstellung ein drittes Ausführungsbeispiel eines erfindungsgemäßen Möbelantriebes in einer Perspektivansicht bei geschlossenem Gehäuse,
- FIG. 14: den Möbelantrieb gemäß Figur 13 bei geöffnetem Gehäuse,
- FIG. 15: ein viertes Ausführungsbeispiel eines erfindungsgemäßen Möbelantriebs in einer Perspektivansicht bei geschlossenem Gehäuse,
- FIG. 16: das Ausführungsbeispiel gemäß FIG. 15, wobei aus Gründen der Veranschaulichung Abdeckungen an dem Gehäuse weggelassen sind,
- FIG. 17: das Ausführungsbeispiel gemäß FIG. 15 in einer Perspektivansicht, wobei aus Gründen der Veranschaulichung das Gehäuse weggelassen ist,
- FIG. 18: in gleicher Darstellung wie FIG. 15 ein fünftes Ausführungsbeispiel eines erfindungsgemäßen Möbelantriebs bei geschlossenem Gehäuse,
- FIG. 19A: jeweils in einer Perspektivansicht Be
- bis: standteile der Antriebseinheit und der
- FIG. 19B: Zugeinheit des Ausführungsbeispieles gemäß FIG. 18, wobei aus Gründen der Veranschaulichung das Gehäuse jeweils weggelassen ist.

In den Figuren der Zeichnung sind gleiche bzw. entsprechende Bauteile mit den gleichen Bezugszeichen versehen.

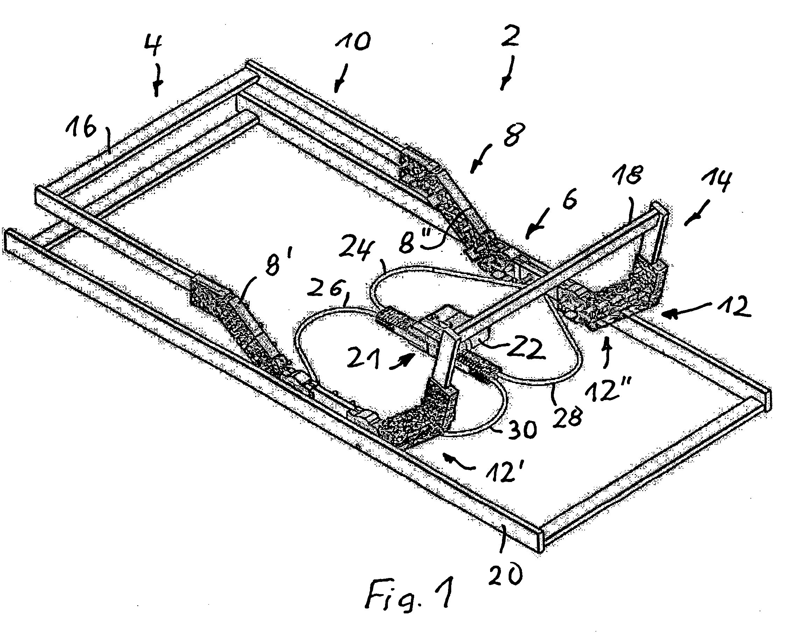

In FIG. 1 ist schematisiert in einer Perspektivansicht ein Lattenrost 2 dargestellt, wobei die Lattung des Lattenrostes, also federnde Latten beispielsweise Federhölzer, und zugehörige Halteteile, zur Vereinfachung der Darstellung weggelassen sind.

Der Lattenrost 2 ist elektromotorisch verstellbar und dient bei Benutzung zur Abstützung einer in der Zeichnung nicht dargestellten Matratze. Der Lattenrost 2 weist einen Grundkörper 4 auf, der in Längsrichtung des Lattenrostes 2 aufeinanderfolgende, jeweils um eine horizontale Schwenkachse schwenkbar miteinander verbundene Stützteile aufweist. Im Einzelnen weist der Grundkörper 4 bei dem dargestellten Ausführungsbeispiel ein ortsfestes mittleres Stützteil 6 auf, mit dem gelenkig und um eine horizontale Schwenkachse verschwenkbar ein Beinstützteil 8 verbunden ist, mit dessen dem mittleren Stützteil 6 abgewandten Ende gelenkig und um eine horizontale Schwenkachse verschwenkbar ein Wadenstützteil 10 verbunden ist. Mit dem dem Beinstützteil 8 abgewandten Ende des mittleren Stützteiles 6 ist gelenkig und um eine horizontale Schwenkachse verschwenkbar ein Oberkörperstützteil 12 verbunden, mit dessen dem mittleren Stützteil 6 abgewandten Ende gelenkig und um eine horizontale Schwenkachse verschwenkbar ein Kopfstützteil 14 verbunden ist.

Jedes der Stützteile 6 bis 14 des Lattenrostes 2 weist zwei seitlich, also quer zur Längsrichtung des Lattenrostes 2, zueinander beabstandete Längsholme auf, wie dies exemplarisch für das Beinstützteil 8 durch die Bezugszeichen 8' und 8" und für das Oberkörperstützteil 12 durch die Bezugszeichen 12', 12'' bezeichnet ist. Die durch die Längsholme der einzelnen Stützteile 6 bis 14 gebildeten Längsholme des Lattenrostes 2 sind an ihren Enden durch Querholme 16,18 miteinander verbunden.

Die Längsholme des mittleren Stützteiles 6 sind mit einem Außenrahmen 20 des Lattenrostes 2 verbunden, der bei Benutzung des Lattenrosts 2 beispielsweise in ein Bettgestell einlegbar ist.

Zur elektromotorischen Verstellung der Stützteile 4 bis 14 relativ zueinander ist ein elektromotorischer Universal-Möbelantrieb 21 gemäß einem ersten Ausführungsbeispiel der Erfindung vorgesehen, der einen als Gehäuse 22 ausgebildeten Grundkörper aufweist, in dem in weiter unten näher erläuterter Weise Bestandteile des Möbelantriebs aufgenommen sind.

FIG. 1 zeigt den Lattenrost 2 in einer maximal verstellten Position, die einer Sitzposition entspricht.

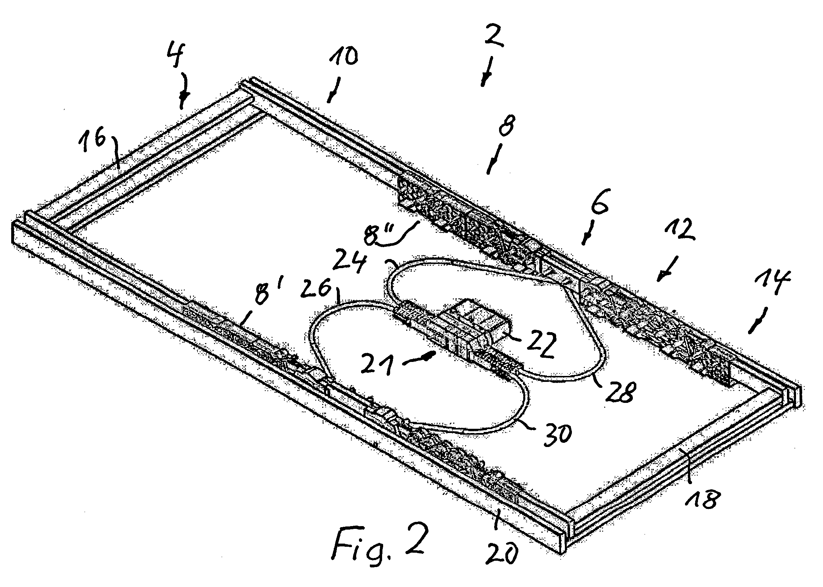

FIG. 2 zeigt den Lattenrost 2 in einer unverstellten Position, die einer Liegeposition entspricht und in der die Stützteile 6 bis 14 miteinander eine durchgehende, im Wesentlichen horizontale Stützebene aufspannen.

Nachfolgend wird die Erfindung anhand einer Verstellung des zu dem mittleren Stützteil 6 (erstes Stützteil) schwenkverstellbaren Oberkörperstützteiles (zweites Stützteil) erläutert. Die Verstellung des Beinstützteiles 8 relativ zu dem mittleren Stützteil 6 erfolgt in entsprechender Weise und wird daher hier nicht näher erläutert.

Bei einer Schwenkverstellung des Oberkörperstützteiles 12 relativ zu dem mittleren Stützteil 6 wird gleichzeitig das Kopfstützteil 14 relativ zu dem Oberkörperstützteil 12 verstellt, wobei das Kopfstützteil 14 mit dem Oberkörperstützteil 12 über ein entsprechendes Schwenkgelenk verbunden ist. Entsprechendes gilt für eine Verstellung des Wadenstützteiles 10 bei einer Verstellung des Beinstützteiles 8.

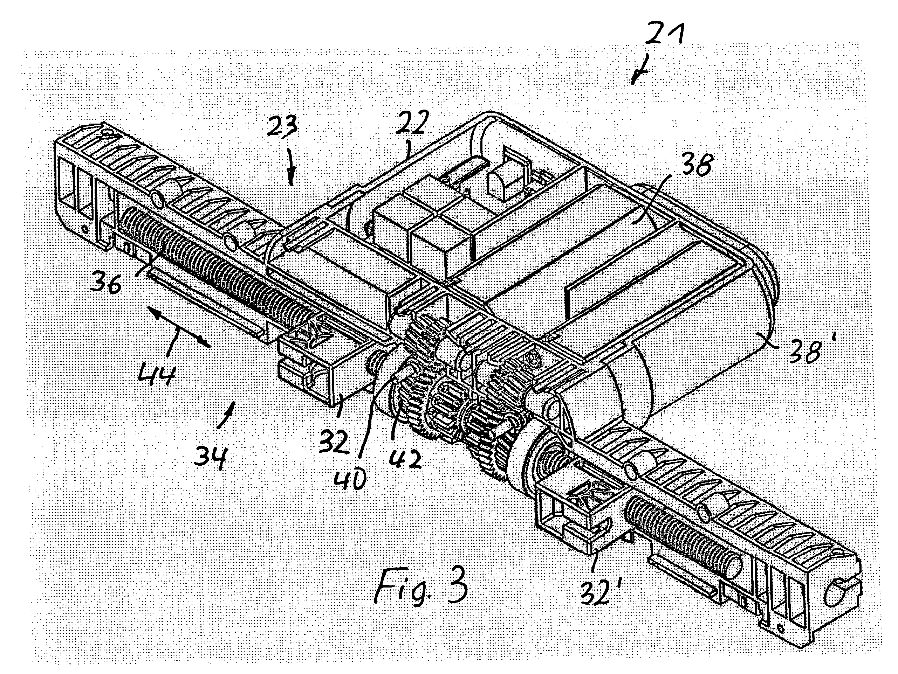

Bei dem dargestellten Ausführungsbeispiel ist zur Verstellung ein bei diesem Ausführungsbeispiel als Doppelantrieb ausgebildeter erfindungsgemäßer elektromotorischer Möbelantrieb 21 vorgesehen, der eine Antriebseinheit 23 (vgl. FIG. 3) aufweist, die bei dem dargestellten Ausführungsbeispiel zwei Antriebsstränge aufweist. Der eine Antriebsstrang ist dem Oberkörperstützteil 12 zugeordnet zum Verstellen desselben relativ zu dem mittleren Stützteil 6, während der andere Antriebsstrang dem Beinstützteil 8 zugeordnet ist zum Verstellen desselben zu dem mittleren Stützteil 6. Bei dem dargestellten Ausführungsbeispiel weist die Antriebseinheit 23 in weiter unten näher erläuterter Weise zwei Elektromotoren als Antriebsmotoren auf, von denen jeder einem Antriebsstrang zugeordnet ist.

Erfindungsgemäß ist zur Kraftübertragung von dem Möbelantrieb 21 auf das zweite Stützteil (Oberkörperstützteil 12) wenigstens ein Bowdenzug mit einem in einer Ummantelung aufgenommenen Zugseil vorgesehen.

Bei dem in der Zeichnung dargestellten Ausführungsbeispiel sind dem zweiten Stützteil (Oberkörperstützteil 12) zwei Bowdenzüge 24,26 zugeordnet, von denen der Bowdenzug 24 mit dem einen Längsholm 12'' und der andere Bowdenzug 26 mit dem anderen Längsholm 12' des Oberkörperstützteiles 12 in Wirkungsverbindung steht. Nachfolgend wird ausschließlich das Zusammenwirken des Bowdenzuges 24 mit dem Längsholm 12'' beschrieben. Das Zusammenwirken des Bowdenzuges 26 mit dem anderen Längsholm 12' ist entsprechend und wird daher nachfolgend nicht näher erläutert. Das Gleiche gilt für das Zusammenwirken weiterer Bowdenzüge 28,30 mit den Längsholmen 8" und 8' des Beinstützteiles 8.

FIG. 3 zeigt eine Perspektivansicht des Gehäuses 22, das zur Veranschaulichung teilweise offen dargestellt ist. Der Bowdenzug 24, der in FIG. 3 nicht dargestellt ist, weist in allgemein bekannter Weise ein flexibles, auf Zug beanspruchbares und beim Verstellen des Oberkörperstützteiles 12 relativ zu dem mittleren Stützteil 6 auf Zug beanspruchtes Zugseil auf, das in einer flexiblen Ummantelung aufgenommen ist. Zum Ziehen an dem Zugseil ist dem Bowdenzug 24 ein linear bewegliches Zugelement zugeordnet, das bei dem dargestellten Ausführungsbeispiel durch eine Spindelmutter 32 eines Spindeltriebes 34 gebildet ist, dessen Gewindespindel 36 mit einem Elektromotor 38 in Drehantriebsverbindung steht. Hierzu ist eine Abtriebswelle 40 des Elektromotors 38 als Schnecke ausgebildet, die mit einem Schneckenrad 42 in Eingriff steht, das drehfest mit der Gewindespindel 36 verbunden ist. Dementsprechend ist die Spindelmutter 32 entsprechend der Drehrichtung der Abtriebswelle 40 des Elektromotors 38 in Axialrichtung der Gewindespindel entlang eines Doppelpfeiles 44 beweglich. FIG. 3 zeigt die Spindelmutter 32 in einer Position, die einer maximal verstellten Position des Oberkörperstützteiles 12 relativ zu dem mittleren Stützteil 6 (vgl. FIG. 1) entspricht.

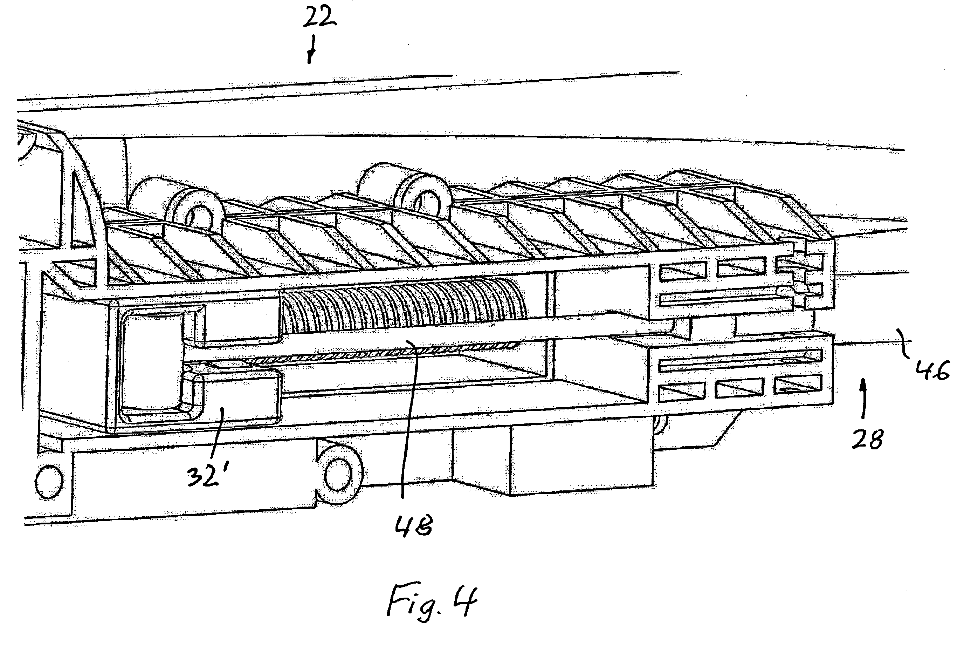

Die Verbindung des Bowdenzuges 24 mit der Spindelmutter 32 wird nachfolgend anhand von FIG. 4 näher erläutert. Dabei zeigt FIG. 4 die Verbindung des Bowdenzuges 28 mit einer weiteren Spindelmutter 32', die mit einem weiteren Elektromotor 38' in Antriebsverbindung steht. Die Verbindung des Bowdenzuges 24 mit der Spindelmutter 32 ist entsprechend.

Der Bowdenzug 28 weist eine Ummantelung 46, die an dem Gehäuse 22 festgelegt ist, und ein Zugseil 48 auf, das an der Spindelmutter 32' festgelegt ist und so zugfest mit derselben verbunden ist.

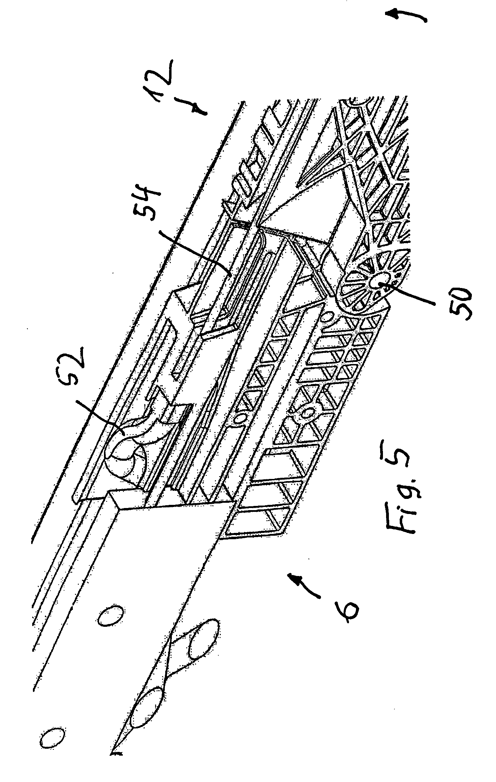

FIG. 5 zeigt eine Einzelheit im Bereich der Verbindung des Oberkörperstützteiles 12 mit dem mittleren Stützteil 6. Das Oberkörperstützteil 12 ist mit dem mittleren Stützteil 6 um eine horizontale Schwenkachse 50 verbunden. Wie in FIG. 5 dargestellt, ist eine Ummantelung 52 des Bowdenzuges 24 an dem mittleren Stützteil 6 festgelegt, während das Zugseil 54 des Bowdenzuges 24 exzentrisch zu der Schwenkachse 50 an dem Oberkörperstützteil 12 festgelegt ist.

In der unverstellten Position des Lattenrostes (vgl. FIG. 2) befindet sich die Spindelmutter 32 an dem in FIG. 3 linken Ende der Gewindespindel 36. Zur Verstellung des Oberkörperstützteiles 12 relativ zu dem mittleren Stützteil 6 dreht der Elektromotor 38 die Gewindespindel in einer Drehrichtung, die einer Bewegung der Spindelmutter 32 in FIG. 3 nach rechts entspricht. Hierbei zieht die Spindelmutter 32 an dem Zugseil 54 des Bowdenzuges 24, so dass das Oberkörperstützteil 12 relativ zu dem mittleren Stützteil 6 verschwenkt wird, bis ein Benutzer des Lattenrostes 2 die Verstellbewegung unterbricht oder in einer maximalen Verstelllage (FIG. 1) der Elektromotor durch einen Endlagenschalter (nicht dargestellt) abgeschaltet wird. Sowohl eine Steuerungseinrichtung zur Ansteuerung der Antriebsmittel des Lattenrostes 2 als auch eine Spannungsversorgungseinrichtung sind in FIG. 1 zur Vereinfachung der Darstellung weggelassen.

Über den Bowdenzug 26 wird die von dem Elektromotor 38 aufgebrachte Verstellkraft gleichzeitig in den Längsholm 12' des Oberkörperstützteiles 12 eingeleitet. Um die Einleitung der Verstellkraft in die Längsholme 12',12'' des Oberkörperstützteiles 12 zu synchronisieren, sind die Zugseile der Bowdenzüge 24,26 zweckmäßigerweise beide an der Spindelmutter 32 festgelegt.

Eine Rückstellung aus der verstellten Position (vgl. FIG. 1) des Lattenrostes 2 in die unverstellte Position (vgl. FIG. 2) oder eine Zwischenposition erfolgt bei eingeschaltetem Antrieb, jedoch unter Einfluss der Gewichtskraft des jeweiligen Stützteiles bzw. der jeweiligen Stützteile, gegebenenfalls zusätzlich unter der Gewichtskraft einer auf dem Lattenrost 2 ruhenden Person.

Die Erfindung stellt bei dem dargestellten Ausführungsbeispiel im Ergebnis einen Lattenrost zur Verfügung, der hinsichtlich der Anordnung des Möbelantriebs relativ zu den zu verstellenden Stützteilen weitgehende Freiheiten bietet.

Wie aus FIG. 1 ersichtlich ist, weist das Gehäuse 22 bei dem dargestellten Ausführungsbeispiel nur eine geringe Bauhöhe auf, so dass ein besonders flach bauender Lattenrostantrieb realisiert ist.

Aufgrund der Verwendung von Bowdenzügen können erfindungsgemäß unter Verwendung weitgehend übereinstimmender Bauteil insbesondere Lattenroste unterschiedlicher Breite realisiert werden.

In Abwandlung des Ausführungsbeispiels gemäß FIG. 1 kann auch wenigstens ein Längsholm wenigstens eines der Stützteile 4 bis 14 hohl ausgebildet sein zur Aufnahme von Teilen der elektromotorischen Antriebsmittel. Hierbei kann insbesondere ein Elektromotor der Antriebsmittel außerhalb des hohlen Längsholmes angeordnet sein, während beispielsweise Teile einer Getriebeanordnung im Inneren des hohlen Längsholmes aufgenommen sind, wie dies für sich genommen aus EP 1 633 219 B1 bekannt ist, deren Inhalt hiermit durch Bezugnahme voll inhaltlich in die vorliegende Anmeldung aufgenommen wird. Es ist erfindungsgemäß auch möglich, wenigstens einen Elektromotor der elektromotorischen Antriebsmittel innerhalb eines hohlen Längsholmes aufzunehmen, wie dies für sich genommen durch DE 199 62 541 C2 bekannt ist, deren Inhalt ebenfalls voll inhaltlich in die vorliegende Anmeldung aufgenommen wird.

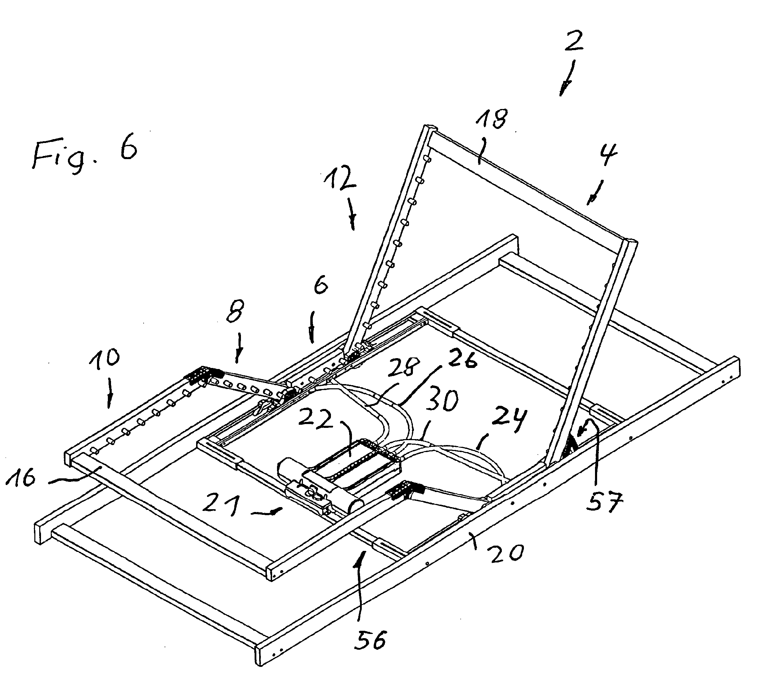

In FIG. 6 ist ein Lattenrost 2 dargestellt, der mittels eines zweiten Ausführungsbeispiels eines erfindungsgemäßen Möbelantriebs 21 verstellbar ist. Das Grundprinzip der Verstellung ist dabei so, wie in Bezug auf das erste Ausführungsbeispiel anhand der FIG. 1 bis 5 beschrieben.

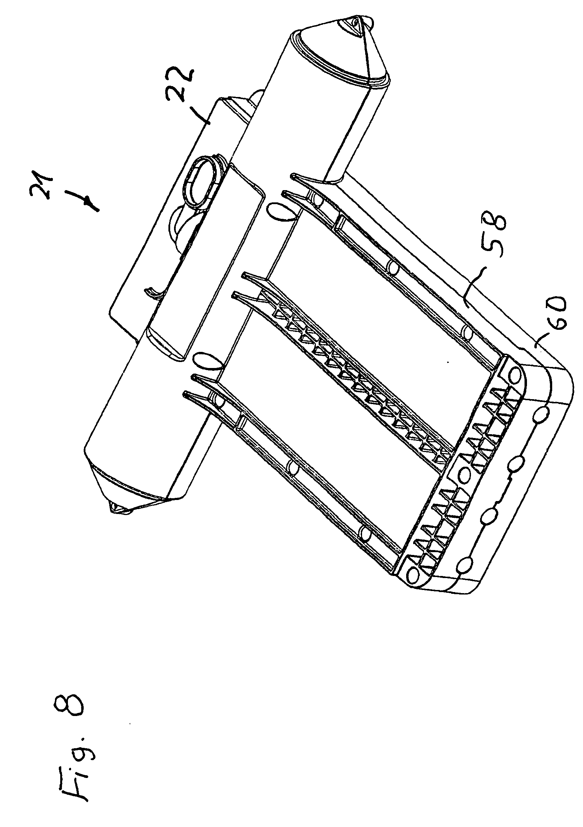

Das in FIG. 6 dargestellte zweite Ausführungsbeispiel des erfindungsgemäßen Möbelantriebs 21 unterscheidet sich von dem Ausführungsbeispiel gemäß FIG. 1 vor allem hinsichtlich seines Aufbaus, der weiter unten anhand der FIG. 8 bis 12 näher erläutert wird. Darüber hinaus unterscheidet sich das zweite Ausführungsbeispiel von dem ersten Ausführungsbeispiel dadurch, dass das Gehäuse 22 des Möbelantriebs 21 an einem Montagerahmen 56 befestigt ist, der weiter unten näher erläutert wird. Hinsichtlich des Lattenrostes 2 besteht zwischen den Ausführungsbeispielen gemäß FIG. 1 und FIG. 6 ein weiterer Unterschied darin, dass der Lattenrost 2 gemäß FIG. 1 ein Oberkörperstützteil 12 und ein separates Kopfstützteil 14 aufweist, während der in FIG. 6 dargestellte Lattenrost zur Abstützung des Oberkörpers und des Kopfes einer auf dem Lattenrost 2 ruhenden Person ein einheitliches Oberkörperstützteil 12 aufweist, das gleichzeitig die Funktion eines Kopfstützteiles erfüllt.

Ein weiterer Unterschied des Ausführungsbeispieles gemäß FIG. 6 zu dem Ausführungsbeispiel gemäß FIG. 1 besteht darin, dass zur Verstellung der Stützteile 12 bzw. 8, 10 relativ zu dem mittleren Stützteil 6 jeweils eine Aufstellhebel-Anordnung verwendet wird, die in FIG. 6 bei dem Bezugszeichen 57 angedeutet ist und weiter unten näher erläutert wird.

FIG. 6 zeigt den Lattenrost 2 in seiner maximal verstellten Position, die einer Sitzposition entspricht.

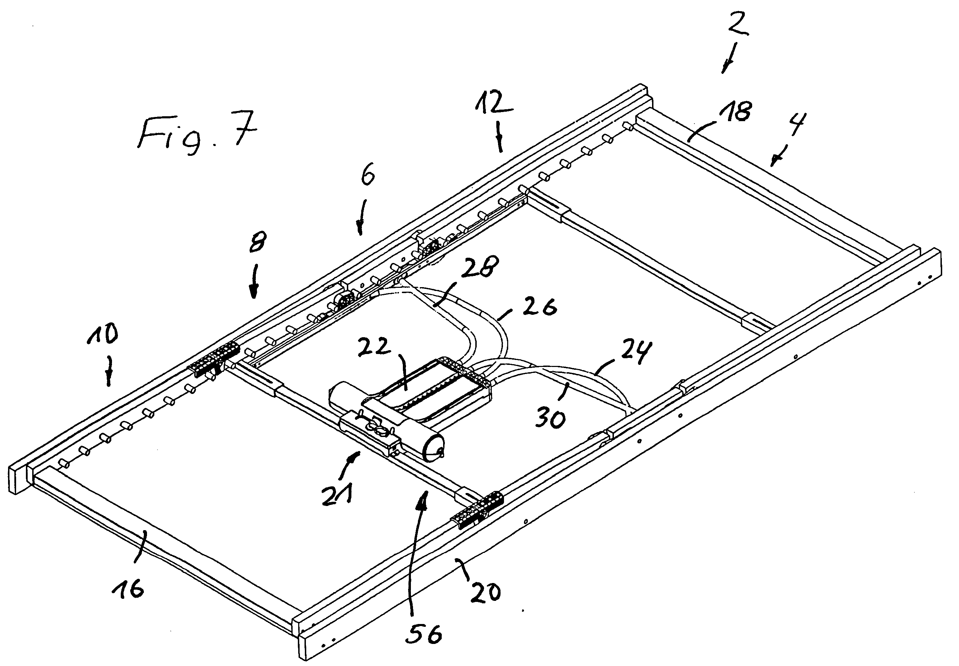

FIG. 7 zeigt den Lattenrost 2 in seiner unverstellten Position, die einer Liegeposition entspricht.

FIG. 8 zeigt den Möbelantrieb 21, wobei das Gehäuse 22 geschlossen dargestellt ist. Bei dem dargestellten Ausführungsbeispiel besteht das Gehäuse aus Halbschalen 58, 60, die zur Montage des Möbelantriebs 21 bei dem dargestellten Ausführungsbeispiel miteinander verschraubbar sind. Die Halbschalen 58, 60 sind in weiter unten näher erläuterten Weise so ausgebildet, dass Bauteile des Möbelantriebs 21 in eine der Halbschalen einlegbar sind und durch Aufsetzen der anderen Halbschale formschlüssig gehalten werden.

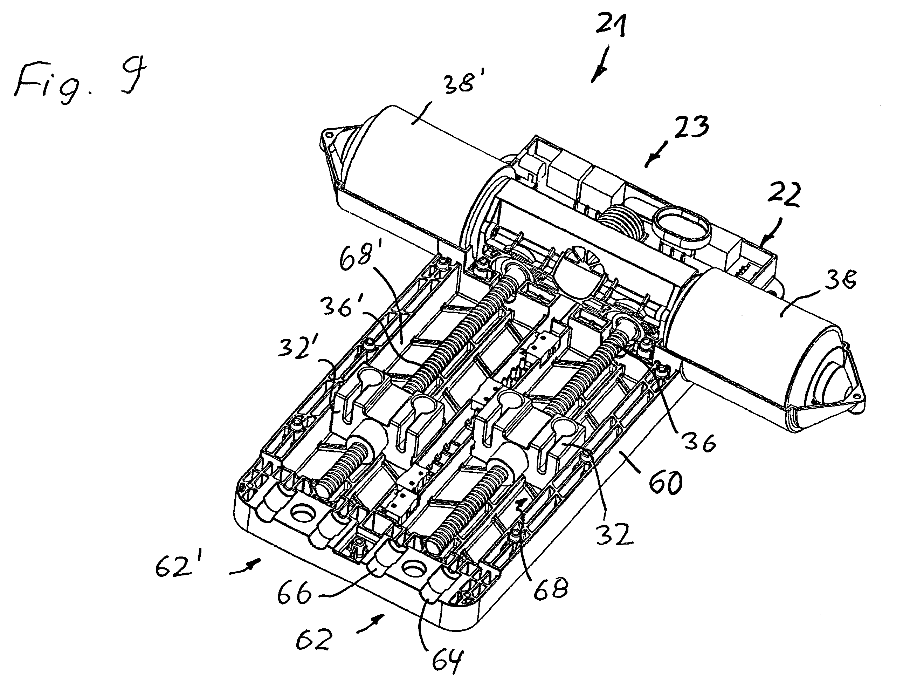

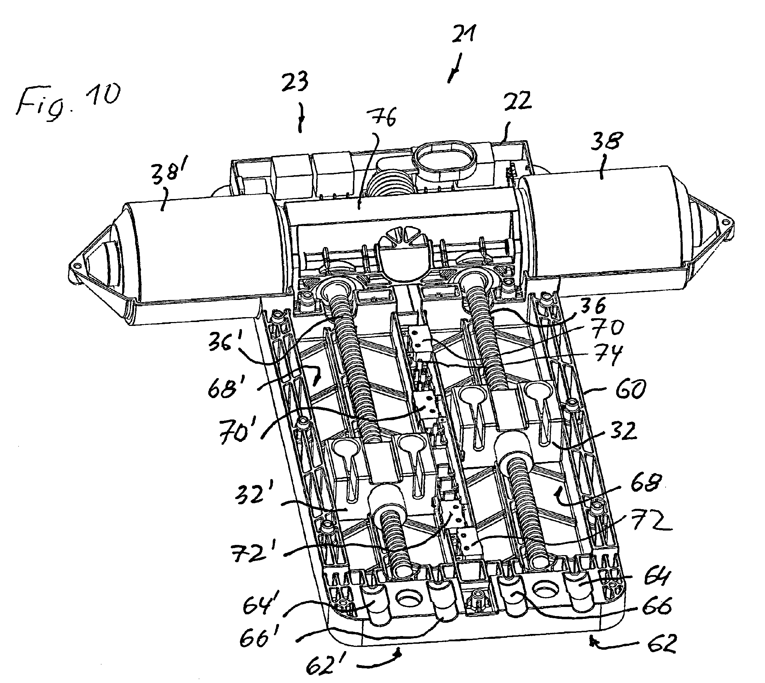

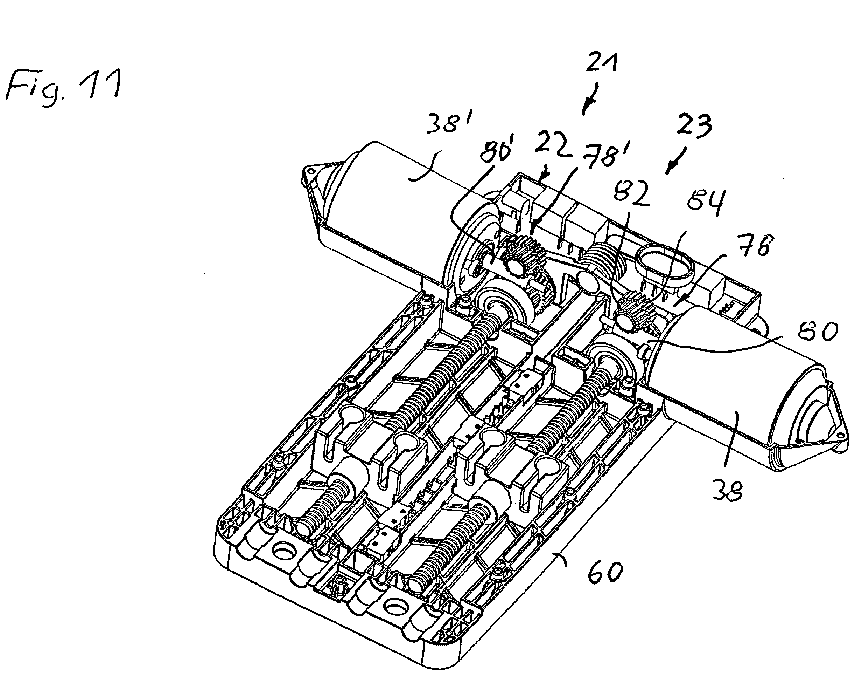

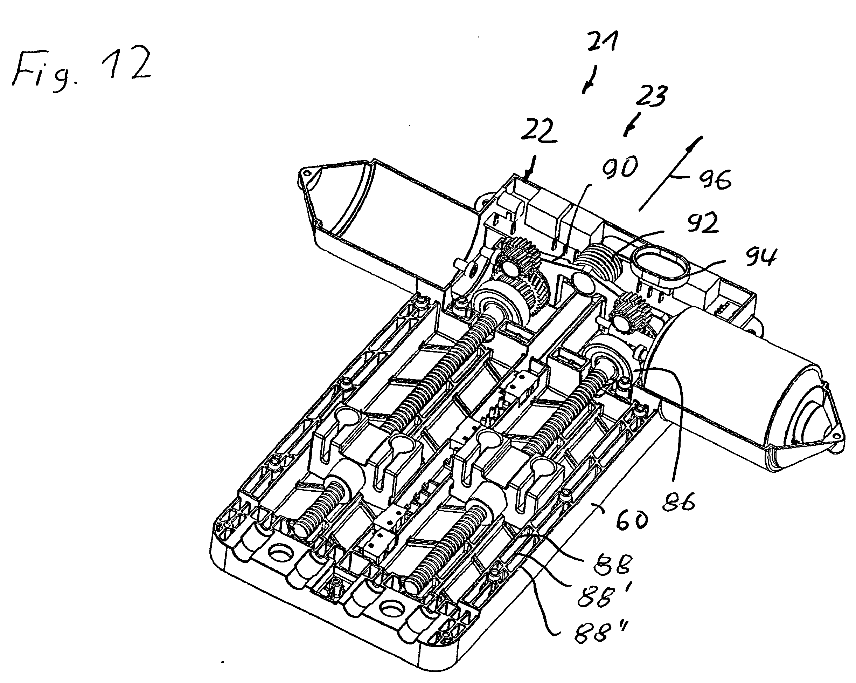

Die FIG. 9 bis 12 zeigen den Möbelantrieb 21 gemäß dem zweiten Ausführungsbeispiel bei geöffnetem Gehäuse 22, also in einem Zustand, in dem die obere Halbschale 58 abgenommen und Bauteile des Möbelantriebs 21 in die untere Halbschale 60 eingelegt sind. Dabei zeigen FIG. 9 und 10 den Möbelantrieb 21 aus verschiedenen Perspektiven. In den FIG. 11 und 12 sind aus Erläuterungsgründen in weiter unten näher beschriebener Weise Bauteile des Möbelantriebs 21 weggelassen.

Aus FIG. 9 ist ersichtlich, dass die Antriebseinheit 23 des Möbelantriebs 21 bei diesem Ausführungsbeispiel zwei Antriebsstränge 62, 62' aufweist, denen jeweils ein Elektromotor 38, 38' zugeordnet ist, wobei die Elektromotoren 38, 38' unabhängig voneinander ansteuerbar sind. Nachfolgend wird ausschließlich der Antriebsstrang 62 näher erläutert, der mittels der Bowdenzüge 28, 30 zum Verstellen des Oberkörperstützteiles 12 relativ zu dem mittleren Stützteil 6 dient. Der Antriebsstrang 62', der mittels der Bowdenzüge 24, 26 zum Verstellen des Beinstützteiles 8 relativ zu dem mittleren Stützteil 6 dient, ist entsprechend aufgebaut und wird daher nicht näher erläutert. Seine Bezugszeichen sind, soweit aus Erläuterungsgründen erforderlich, mit Bezugszeichen versehen, die den Bezugszeichen des Antriebsstranges 62 entsprechen. Aus Darstellungsgründen sind die Bowdenzüge 28, 30 wie auch die Bowdenzüge 24, 26 in den FIG. 9 bis 12 weggelassen.

Bei dem zweiten Ausführungsbeispiel sind wiederum zwei Zugelemente in Form der Spindelmuttern 32, 32' vorgesehen, wobei jedem Zugelement wenigstens zwei Bowdenzüge zugeordnet sind, nämlich der Spindelmutter 32 die Bowdenzüge 28, 30 und der Spindelmutter 32' die Bowdenzüge 24, 26. Wie oben erwähnt, sind die Bowdenzüge 24 bis 30 aus Darstellungsgründen in den FIG. 9 bis 12 weggelassen.

Die Zugseile der Bowdenzüge sind jeweils an den Spindelmuttern 32, 32' festgelegt oder festlegbar.

Das Gehäuse 22 bildet ein gemeinsames Gehäuse, in dem die Antriebseinheit 23 und die Zugelemente, nämlich die Spindelmuttern 32, 32', aufgenommen sind. Die Zugseile der Bowdenzüge 28, 30 sind durch Ausnehmungen 64, 66 zu der Spindelmutter 32 geführt, wobei die Ummantelung der Bowdenzüge 28, 30 jeweils an dem Gehäuse 22 festlegbar bzw. festgelegt sind.

Bei dem dargestellten Ausführungsbeispiel sind die Halbschalen 58, 60 des Gehäuses 22 durch Spritzgussteile aus Kunststoff gebildet.

Die Spindelmutter 32 ist entsprechend der Drehrichtung der Abtriebswelle des Elektromotors 38 in Axialrichtung der Gewindespindel 36 beweglich und mittels einer Linearführung 68 verdrehsicher in dem Gehäuse 22 geführt.

Wie aus FIG. 9 ersichtlich ist, verlaufen bei dem dargestellten Ausführungsbeispiel die den Spindelmuttern 32, 32' zugeordneten Linearführungen 68, 68' zueinander parallel.

Um die Antriebsstränge 62, 62' unabhängig voneinander betätigen und damit das Oberkörperstützteil 12 und das Beinstützteil 8 unabhängig voneinander relativ zu dem mittleren Stützteil 6 verstellen zu können, sind die Elektromotoren 38, 38' unabhängig voneinander ansteuerbar.

Spannungsversorgungs- und Steuerungsmittel der Elektromotoren 38, 38' sind aus Vereinfachungsgründen in der Zeichnung nicht dargestellt. Insbesondere die Steuerungsmittel können innerhalb des Gehäuses 22 aufgenommen sein.

FIG. 10 zeigt den Möbelantrieb 21 aus einer anderen Perspektive.

Zur Abschaltung des Elektromotors 38 in Endlagen der Verstellbewegung, also der in FIG. 6 dargestellten maximal verstellten Position des Lattenrostes 2 und der in FIG. 7 dargestellten unverstellten Position des Lattenrostes 2, sind der Spindelmutter 32 bei dem dargestellten Ausführungsbeispiel zwei Endlagenschalter 70, 72 zugeordnet. Als Halteeinrichtung für die Endlagenschalter 70, 72 weist das Gehäuse eine Mehrzahl von Zapfen auf, von denen aus Gründen der Übersichtlichkeit in FIG. 10 lediglich ein Zapfen mit dem Bezugszeichen 74 versehen ist. Die Zapfen 74 sind einstückig in das Gehäuse 22, nämlich bei dem dargestellten Ausführungsbeispiel die untere Halbschale 60, eingeformt und zueinander beabstandet parallel zur Spindelachse der Gewindespindel 36 im Bereich zwischen den Linearführungen 68, 68' angeordnet. Die Zapfen 74 bilden jeweils paarweise eine Halteeinrichtung für beispielsweise den Endlagenschalter 70 und greifen in Ausnehmungen ein, die in dem Gehäuse des Endlagenschalters 70 gebildet sind. Zur Montage in dem Gehäuse 22 wird der Endlagenschalter 74 also entsprechend der gewünschten Position des Endlagenschalters und damit der gewünschten maximalen Verstelllage auf zwei der Zapfen aufgesteckt. Somit sind die Endlagenschalter 70, 72 an verschiedenen Positionen in Richtung parallel zur Spindelachse der Gewindespindel 36 steckbefestigtbar, so dass auf diese Weise die verschiedenen Endlagen der Verstellbewegung bei der Montage des Möbelantriebs 21 gewählt und festgelegt werden können.

Jeder der Antriebsstränge 62, 62' weist in weiter unten anhand von FIG. 11 näher erläuterter Weise ein Getriebe auf, das zwischen der Abtriebswelle des zugeordneten Elektromotors 38 bzw. 38' und der zugeordneten Gewindespindel 36, 36' angeordnet ist. Die Bestandteile der Getriebe sind an einem Getriebehalteteil 76 angeordnet, das bei diesem Ausführungsbeispiel durch ein Spritzgussteil aus Kunststoff gebildet ist. Bei dem dargestellten Ausführungsbeispiel sind die Elektromotoren 38, 38' über eine Schraubverbindung an dem Getriebe-Halteteil 76 befestigt, so dass eine Motor/Getriebe-Baugruppe gebildet ist.

FIG. 11 zeigt den Möbelantrieb 21, wobei aus Erläuterungsgründen das Getriebe-Halteteil 76 weggelassen ist.

Aus FIG. 11 ist ersichtlich, dass dem Elektromotor 38 ein Getriebe 78 zugeordnet ist. Bei dem dargestellten Ausführungsbeispiel ist die Abtriebswelle 80 des Elektromotors 38 als Schnecke eines Schneckengetriebes ausgebildet, die mit einem Schneckenrad 82 in Eingriff steht, das drehfest mit einem Zahnrad 84 verbunden ist. Aus der Perspektive in FIG. 11 ist nicht erkennbar und deshalb hier näher erläutert, dass das Getriebe 78 eine weitere Schnecke aufweist, die ebenfalls mit der Abtriebswelle 80 in Eingriff steht und drehfest mit einem weiteren Zahnrad verbunden ist, das mit dem Zahnrad 84 in Eingriff steht. Das weitere Schneckenrad ist zusammen mit dem weiteren Zahnrad drehfest mit der Gewindespindel 36 verbunden, so dass sich die Gewindespindel 36 bei einer Drehung der Abtriebswelle 80 des Elektromotors 38 entsprechend dessen Drehrichtung dreht und sich somit die Spindelmutter 32 entsprechend der Drehrichtung der Gewindespindel 36 in deren Axialrichtung hin- bzw. herbewegt.

FIG. 12 zeigt eine zu FIG. 11 ähnliche Ansicht, wobei aus Darstellungsgründen der Elektromotor 38' weggelassen ist. Insbesondere aus FIG. 12 ist ersichtlich, dass das Gehäuse im Bereich der unteren Halbschale 60 so ausgebildet ist, so dass die Elektromotoren 38, 38' bzw. die durch das Getriebe-Halteteil 36 mit daran befestigten Elektromotoren 38, 38' gebildete Motor/Getriebe-Baugruppe in die untere Halbschale 60 einlegbar und in der Einlegeposition formschlüssig von dem Gehäuse 22 gehalten ist. Die obere Halbschale ist entsprechend ausgebildet. Zur formschlüssigen Festlegung der Elektromotoren 38, 38' ist das Gehäuse 22, bei dem dargestellten Ausführungsbeispiel also die Halbschalen 58, 60, zu den Elektromotoren 38, 38' abschnittsweise komplementär geformt, wie dies aus FIG. 12 ersichtlich ist.

Aus FIG. 12 ist ferner ersichtlich, dass zur Lagerung der Gewindespindel 36 ein Kugellager 86 vorgesehen ist, das durch in das Gehäuse 22 eingeformte Stege gehalten werden kann.

Aus einer Zusammenschau der Figuren 9 bis 12 ist ersichtlich, dass Halteeinrichtungen für die Bestandteile des Möbelantriebs 21 einstückig in das Gehäuse 22 bzw. dessen Halbschalen 58, 60 eingeformt sind. Dies gilt insbesondere für die einstückig in das Gehäuse 22 eingeformten Linearführungen 68, 68' und Halteeinrichtungen für die Elektromotoren 38, 38' bzw. die Motor/Getriebe-Baugruppe, die durch das Getriebe-Halteteil 76 mit daran befestigten Elektromotoren 38, 38' gebildet ist. Das gleiche gilt für die durch die Zapfen 74 gebildeten Halteeinrichtungen für die Endlagenschalter 70, 72.

Aus einer Zusammenschau der FIG.en 9 bis 12 und insbesondere aus der FIG. 11 ist ersichtlich, dass bei dem dargestellten Ausführungsbeispiel die Elektromotoren 38, 38' derart an dem Gehäuse 22 angeordnet sind, dass ihre Abtriebswellen 80, 80' einander zugewandt sind und bei dem dargestellten Ausführungsbeispiel miteinander fluchten. Die den Elektromotoren 38, 38' zugeordnetem Getriebe 78, 78' und damit auch das Getriebe-Halteteil 76 sind zwischen den Elektromotoren 38, 38' angeordnet. Gleichzeitig verlaufen die Spindelachsen der Gewindespindeln 36, 36' und damit auch die Linearführungen für die Spindelmuttern 32, 32' zu den Abtriebswellen 80, 80' der Elektromotoren 38, 38' senkrecht. Es ergibt sich damit ein besonders kompakter und platzsparender Aufbau.

Die Montage des erfindungsgemäßen Möbelantriebs 21 erfolgt somit auf besonders einfache Weise dadurch, dass die Motor/Getriebe-Baugruppe und die Bauteile der Antriebsstränge 62, 62' in die untere Halbschale 60 des Gehäuses 22 eingelegt werden. Daran anschließend können die Endlagenschalter 70, 72 in der gewünschten Position angebracht und die Bowdenzüge an den Spindelmuttern 32, 32' eingehängt und dadurch befestigt werden. Daran anschließend kann die obere Halbschale 58 aufgesetzt und die beiden Halbschalen 58, 60 miteinander verbunden werden.

Ein weiterer Vorteil dieses Ausführungsbeispieles besteht darin, dass es aufgrund seiner modularen Bauweise besonders wartungsfreundlich ist.

Entsprechend den jeweiligen Anforderungen kann das Gehäuse 22 abschnittsweise, insbesondere im Bereich der Linearführungen 68, 68' doppel- oder mehrwandig ausgebildet sein, wie dies in FIG. 12 durch drei Wandungen 88, 88', 88" der Außenwandung des Gehäuses 22 dargestellt ist.

Um beispielsweise bei einem Stromausfall manuell eine Notabsenkung ausführen zu können, sind die Elektromotoren 38, 38' von den Gewindespindeln 36, 36' abkoppelbar. Hierzu sind die Schneckenräder der Getriebe 78, 78' an einem Bügel 90 gelagert, der mittels eines Fingergriffes 94 entgegen der Wirkung einer Schraubenfeder 92 in Richtung eines Pfeiles 96 aus der in FIG. 12 dargestellten Eingriffsposition in eine Notabsenkungsposition bewegbar ist. In der in FIG. 12 dargestellten Eingriffsposition drückt die Schraubenfeder 92 den Bügel 90 gegen einen Anschlag, wobei sich die Schneckenräder der Getriebe 78, 78' in Eingriff mit der Abtriebswelle 80 bzw. 80' der Elektromotoren 38, 38' befinden, so dass eine Drehantriebsverbindung zwischen der Abtriebswelle 80 und der Gewindespindel 36 bzw. der Abtriebswelle 80' und der Gewindespindel 36 hergestellt ist. Zur Notabsenkung wird der Bügel 90 mittels des Fingergriffs 94 in Richtung des Pfeiles 96 bewegt, so dass die Schnecken der Getriebe 78, 78' außer Eingriff von den Abtriebswellen 80, 80' der Elektromotoren 38, 38' gelangen und somit die drehfeste Verbindung zu den Gewindespindeln 36, 36' aufgehoben ist. In dieser Notabsenkungsposition können mittels des Möbelantriebs 21 verstellte Stützteile des Möbels von Hand verstellt werden.

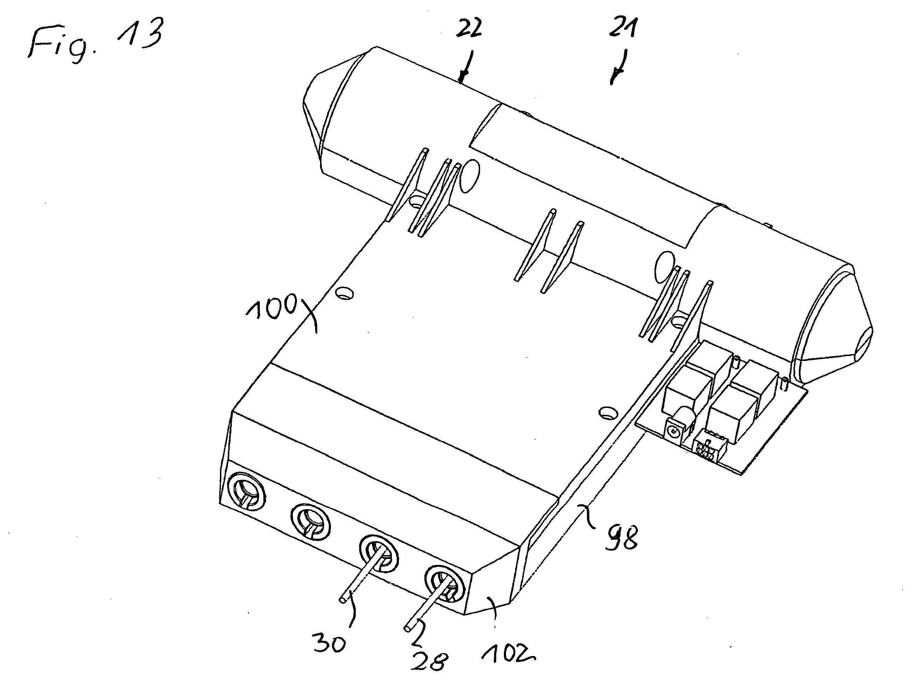

In FIG. 13 ist ein drittes Ausführungsbeispiel eines erfindungsgemäßen Möbelantriebs 21 dargestellt, das sich von dem Ausführungsbeispiel gemäß den Figuren 6 bis 12 vor allem hinsichtlich des Aufbaus des Gehäuses 22 unterscheidet.

Bei dem dritten Ausführungsbeispiel besteht das Gehäuse aus einem Unterteil 98, einem Oberteil 100 und einer Endkappe 102.

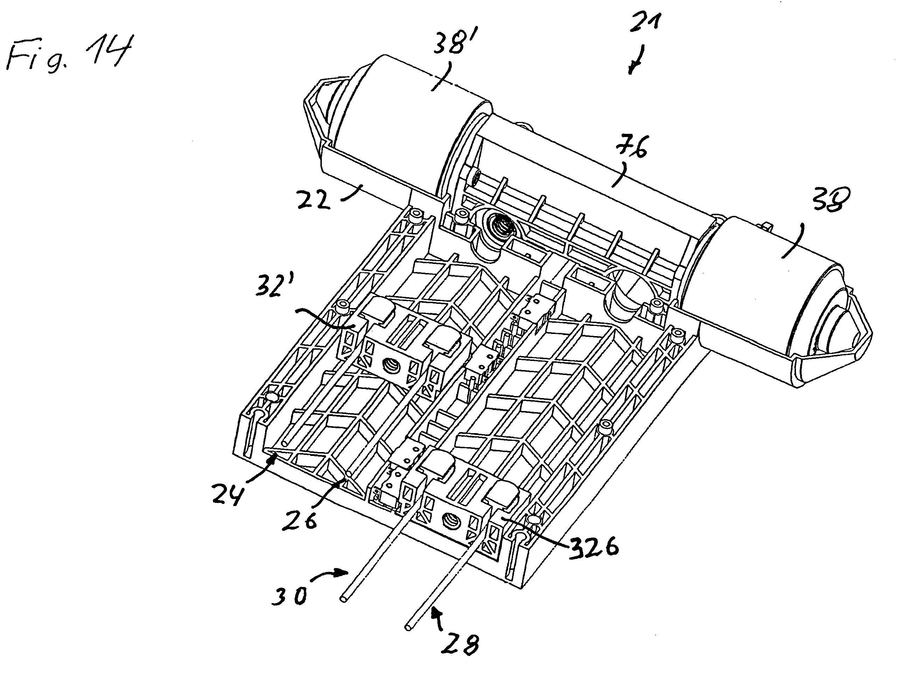

FIG. 14 zeigt das Gehäuse 22 bei abgenommenem Oberteil 100 und abgenommener Endkappe 102, wobei aus Darstellungsgründen diverse Bauteile der Antriebsstränge 62, 62' weggelassen sind. Zur Montage des Möbelantriebs 21 werden bei diesem Ausführungsbeispiel die Spindelmuttern 32, 32' in eine vordefinierte Montageposition bewegt, wie dies in FIG. 14 für die Spindelmutter 32 dargestellt ist. Daran anschließend wird die Endkappe 102 mit vormontierten Bowdenzügen, wie in FIG. 13 für die Bowdenzüge 28, 30 dargestellt, auf das Unterteil aufgesetzt, wobei die Bowdenzüge 28, 30 in Eingriff mit der Spindelmutter 32 gelangen. Auf diese Weise ist die Montage des Möbelantriebs 21 weiter vereinfacht.

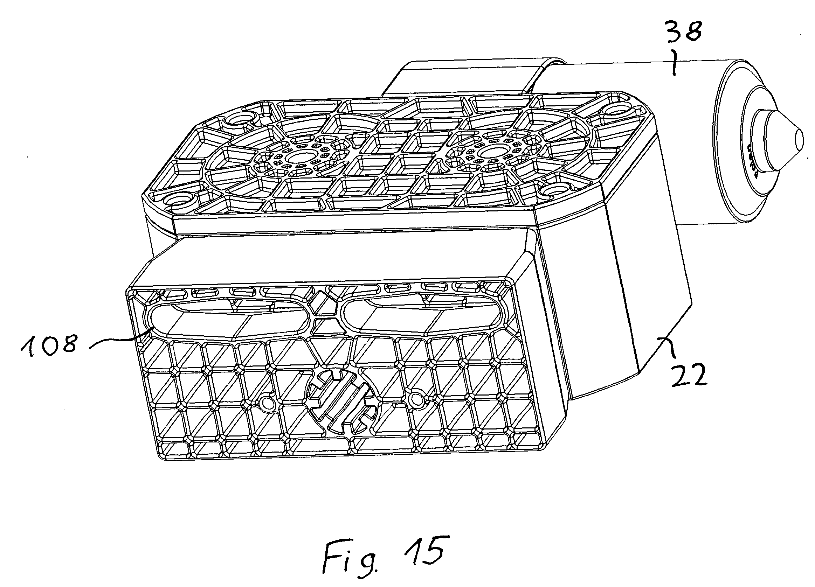

In FIG. 15 ist ein viertes Ausführungsbeispiel eines erfindungsgemäßen Möbelantriebes dargestellt, das einen als Gehäuse 22 ausgebildeten Grundkörper aufweist und bei dem die Antriebseinheit einen einzelnen Elektromotor 38 aufweist. Zur Vereinfachung der Darstellung sind in FIG. 15 die Bowdenzüge weggelassen.

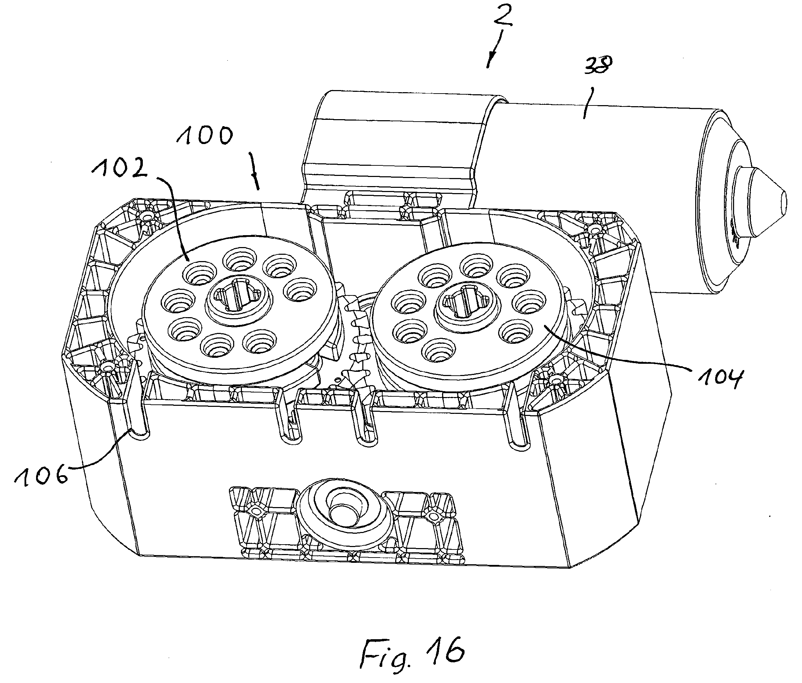

FIG. 16 zeigt das Ausführungsbeispiel gemäß FIG. 15, wobei aus Gründen der Veranschaulichung Teile des Gehäuses 22 weggelassen sind.

Das vierte Ausführungsbeispiel unterscheidet sich von den zuvor erläuterten Ausführungsbeispielen vor allem dadurch, dass wenigstens ein Zugelement als Wikkelvorrichtung zum Aufwickeln des Zugseiles eines Bowdenzuges ausgebildet ist. In FIG. 16 ist eine Zugeinheit 100 dargestellt, die als Zugelement zwei als Wickeltrommeln ausgebildete Wickelvorrichtungen 102, 104 aufweist. Falls der Möbelantrieb beispielsweise verwendet wird, um die Bowdenzüge 24, 26 (vgl. FIG. 1) zu betätigen, so ist beispielsweise das Zugseil des Bowdenzuges 24 an der Wickeltrommel 102 und das Zugseil des Bowdenzuges 26 an der Wickeltrommel 104 festgelegt. Die Ummantelungen der Bowdenzüge 24, 26 sind an dem Gehäuse 22 (vgl. FIG. 15) festgelegt.

Nachfolgend wird lediglich die Wickeltrommel 102 beschrieben. Die Wickeltrommel 104 ist entsprechend aufgebaut und wird daher hier nicht näher erläutert.

Die Wickeltrommel 102 ist um eine Drehachse drehbar in dem Gehäuse 22 gelagert und weist einen Wickelkern auf, auf dem das Zugseil des zugeordneten Bowdenzuges beim Drehen der Wickeltrommel 102 aufgewickelt wird. Das Zugseil des Bowdenzuges wird durch Ausnehmungen 106 und 108 (vgl. FIG. 15) aus dem Gehäuse 22 zu einem zu verstellenden Bauteil geführt. Um beispielsweise die Bowdenzüge 24, 26 (vgl. FIG. 1) exakt synchron zu betätigen, sind die Wickeltrommeln 102 bei dem dargestellten Ausführungsbeispiel drehsynchronisiert.

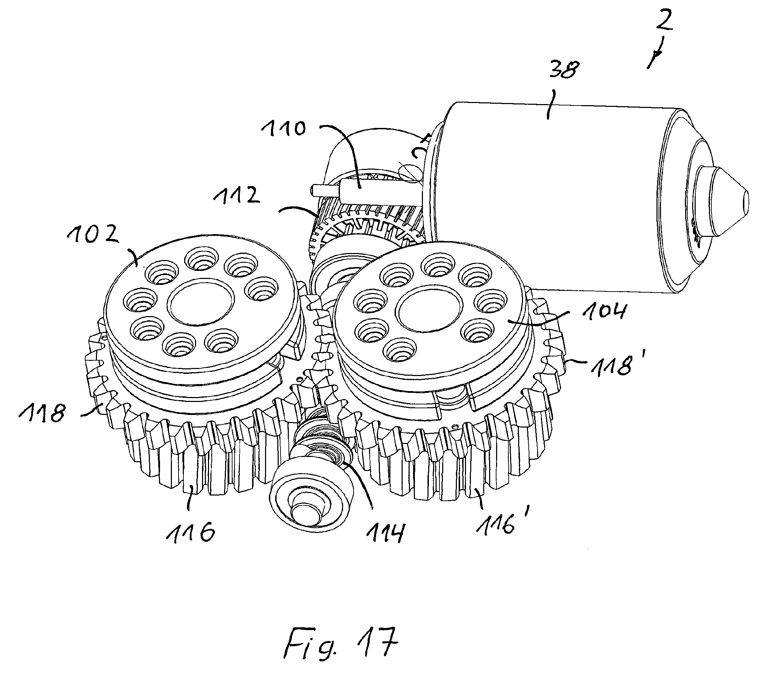

FIG. 17 zeigt den zugrunde liegenden Antriebsmechanismus. Die Abtriebswelle des Elektromotors 38 ist als erste Schnecke 110 ausgebildet, die mit einem ersten Schneckenrad 112 in Eingriff steht. Mit dem ersten Schneckenrad 112 ist drehfest eine zweite Schnecke 114 verbunden, mit der ein zweites Schneckenrad 116 in Eingriff steht, das drehfest mit der Wickeltrommel 102 verbunden ist. Ferner ist mit der Wickeltrommel 102 und dem zweiten Schneckenrad 116 drehfest ein Stirnrad 118 verbunden. Die Antriebsverbindung zwischen dem Elektromotor 38 und der Wickeltrommel 104 ist entsprechend aufgebaut, wobei mit der Wickeltrommel 104 drehfest ein weiteres zweites Schneckenrad 116 verbunden ist. Ferner ist drehfest mit der Wickeltrommel 104 ein Stirnrad 118' verbunden, das mit dem Stirnrad 118 in Eingriff steht, so dass auf diese Weise die Wickeltrommeln 102, 104 drehsynchronisiert sind.

Bei Benutzung des Möbelantriebs 2 treibt der Elektromotor 38 über seine Abtriebswelle die Schnecke 114 an, die über die zweiten Schneckenräder 116, 116' die Wickeltrommeln 102, 104 drehantreibt, so dass die Zugseile der zugeordneten Bowdenzüge, beispielsweise der Bowdenzüge 24, 26 (vgl. FIG. 1), entsprechend der Drehrichtung der Abtriebswelle 110 auf- oder abgewickelt werden.

Aus einer Zusammenschau der FIG. 15 bis 17 ist ersichtlich, dass das Ausführungsbeispiel gemäß diesen Figuren einfach im Aufbau und besonders kompakt ist.

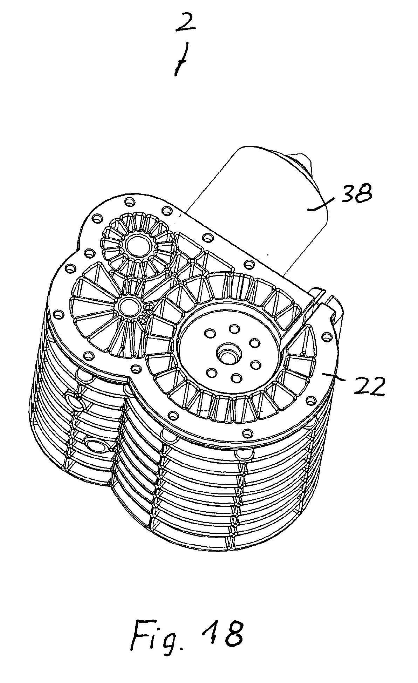

FIG. 18 zeigt ein fünftes Ausführungsbeispiel eines erfindungsgemäßen Möbelantriebs 2.

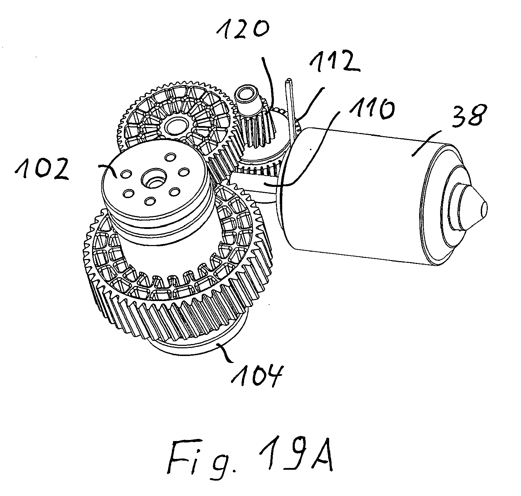

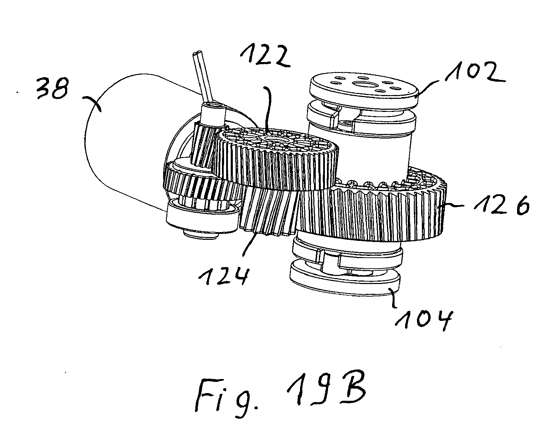

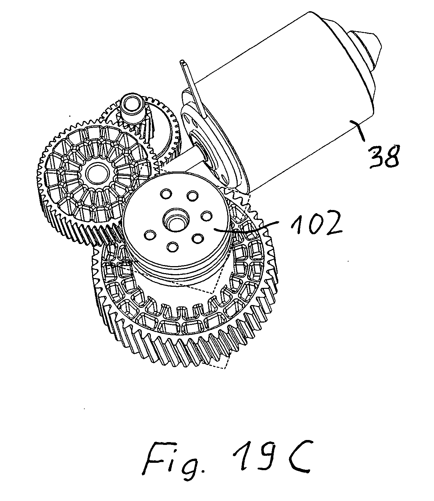

Die FIG. 19A bis 19C zeigt das Ausführungsbeispiel gemäß FIG. 18, wobei aus Gründen der Veranschaulichung das Gehäuse 22 weggelassen ist. Das Ausführungsbeispiel gemäß FIG. 18 und FIG. 19 unterscheidet sich von dem Ausführungsbeispiel gemäß FIG. 15 vor allem durch die Art und Weise, wie eine Drehbewegung der Abtriebswelle des Elektromotors 38 in eine Drehbewegung der Wickeltrommeln 102, 104 umgesetzt wird.

Aus FIG. 19A ist ersichtlich, dass die Wickeltrommeln 102, 104 bei dem dargestellten Ausführungsbeispiel drehfest miteinander verbunden sind. Die Abtriebswelle 110 des Elektromotors 38 ist als Schnecke ausgebildet, die mit einem Schneckenrad 112 in Eingriff steht, mit dem drehfest ein erstes Stirnrad 120 verbunden ist.

Das erste Stirnrad 120 steht in Eingriff mit einem zweiten Stirnrad 122 (vgl. insbesondere FIG. 19B), das drehfest mit einem dritten Stirnrad 124 verbunden ist, das seinerseits in Eingriff mit einem vierten Stirnrad 126 steht, das drehfest mit den Wickeltrommeln 102, 104 verbunden ist. Bei Drehung der Abtriebswelle 110 des Elektromotors 38 werden somit die Wickeltrommeln 102, 104 drehangtrieben, so dass sie entsprechend der Drehrichtung der Abtriebswelle 110 die Zugseile der ihnen zugeordneten Bowdenzüge, beispielsweise der Bowdenzüge 24, 26, betätigen.

Die in den Figuren 15 bis 19 dargestellten Ausführungsbeispiele sind beispielsweise dazu geeignet, das Oberkörperstützteil 12 der Stützeinrichtung gemäß FIG. 1 zu verstellen. Es ist erfindungsgemäß auch möglich, die Wickeltrommeln 102, 104 derart auszubilden, dass sie gleichzeitig jeweils noch ein weiteres Zugseil, beispielsweise das Zugseil eines der Bowdenzüge 28, 30 (vgl. FIG. 1), aufzuwickeln, um gleichzeitig mit dem Oberkörperstützteil 12 das Beinstützteil 8 zu verstellen.

Falls eine voneinander unabhängige Verstellung des Oberkörperstützteiles 12 und des Beinstützteiles 8 gewünscht ist, so kann ein zusätzlicher Möbelantrieb vorgesehen sein, der zur Verstellung des Beinstützteiles 8 verwendet wird.

Die Erfindung ist anhand von Ausführungsbeispielen näher erläutert worden, die die Verstellung eines Lattenrostes betreffen. Der erfindungsgemäße Möbelantrieb ist jedoch auch zur Verstellung beliebiger anderer Bauteile geeignet und verwendbar, bei denen die Verstellung durch Ausüben einer Zugkraft vorgenommen werden kann. Beispielsweise ist der erfindungsgemäße Möbelantrieb auch in industriellen Applikationen oder zur Verstellung von Türen oder Fenstern geeignet.

## Patentansprüche

1. Elektromotorischer Möbelantrieb zum Verstellen von Teilen eines Möbels relativ zueinander,
mit einer Antriebseinheit, die wenigstens einen Elektromotor (38) aufweist und mit wenigstens einer Zugeinheit in Antriebsverbindung steht,
wobei jeder Zugeinheit wenigstens zwei Bowdenzüge (24, 26; 28, 30) zugeordnet sind, deren Zugseile jeweils mit der zugeordneten Zugeinheit in Wirkungsverbindung stehen,
mit einem vorzugsweise als Gehäuse (22) ausgebildeten Grundkörper in oder an dem die Zugeinheit aufgenommen ist,
wobei die Zugseile vorzugsweise durch wenigstens eine Ausnehmung (64, 66) in dem oder an dem Grundkörper zu der Zugeinheit bzw. den Zugeinheiten geführt oder führbar sind und
wobei die Ummantelungen der Bowdenzüge an dem Grundkörper festgelegt oder festlegbar sind.

2. Möbelantrieb nach Anspruch 1, **dadurch gekennzeichnet, dass** jede Zugeinheit wenigstens zwei Zugelemente aufweist, von denen jedes einem Zugseil eines Bowdenzuges (24, 26) zugeordnet ist.

3. Möbelantrieb nach Anspruch 2, **dadurch gekennzeichnet, dass** wenigstens ein Zugelement in oder an dem Gehäuse (22) linear beweglich ist.

4. Möbelantrieb nach Anspruch 3, **dadurch gekennzeichnet, dass** wenigstens eine Führung für wenigstens ein Zugelement in das Gehäuse (22) integriert, insbesondere einstückig in das Gehäuse (22) eingeformt ist.

5. Möbelantrieb nach Anspruch 4, **dadurch gekennzeichnet, dass** die Führung eine Linearführung (68) ist.

6. Möbelantrieb nach einem der vorhergehenden Ansprüche, **dadurch gekennzeichnet, dass** die Antriebseinheit wenigstens zwei Elektromotoren (38, 38') aufweist, die vorzugsweise unabhängig voneinander ansteuerbar sind.

7. Möbelantrieb nach einem der vorhergehenden Ansprüche, **dadurch gekennzeichnet, dass** jeder Zugeinheit wenigstens ein Elektromotor (38) zugeordnet ist und mit demselben in Antriebsverbindung steht.

8. Möbelantrieb nach einem der vorhergehenden Ansprüche, **dadurch gekennzeichnet, dass** das Gehäuse (22) derart geformt ist, dass wenigstens ein Elektromotor (38) in das Gehäuse (22) einlegbar und in der Einlegeposition formschlüssig von dem Gehäuse (22) gehalten ist.

9. Möbelantrieb nach einem der vorhergehenden Ansprüche, **dadurch gekennzeichnet, dass** die Antriebseinheit wenigstens ein Getriebe (78) aufweist, dessen Bestandteile an einem Getriebe-Halteteil (76) angeordnet sind, insbesondere an demselben gehalten sind, wobei vorzugsweise wenigstens ein Elektromotor (38) an dem Getriebe-Halteteil befestigt ist und mit dem Getriebe-Halteteil (76) eine Motor/Getriebe-Baugruppe bildet und/oder wobei vorzugsweise das Gehäuse (22) so geformt ist, dass die Motor/Getriebe-Baugruppe in das Gehäuse (22) einlegbar und in der Einlegeposition formschlüssig von dem Gehäuse (22) gehalten ist.

10. Möbelantrieb nach einem der vorhergehenden Ansprüche, **dadurch gekennzeichnet, dass** wenigstens einem Zugelement wenigstens ein Endlagenschalter (70, 72) zugeordnet ist.

11. Möbelantrieb nach einem der Ansprüche 2 bis 10, **dadurch gekennzeichnet, dass** wenigstens ein Zugelement als Wickelvorrichtung (102, 104) zum Aufwickeln des Zugseiles eines Bowdenzuges (24, 26) ausgebildet ist.

12. Möbelantrieb nach Anspruch 11, **dadurch gekennzeichnet, dass** wenigstens eine Zugeinheit zwei Wickelvorrichtungen (102, 104) aufweist, von denen die eine dem einen der der Zugeinheit zugeordneten Bowdenzüge (24, 26) und die andere dem anderen der der Zugeinheit zugeordneten Bowdenzüge (24, 26) zugeordnet ist.

13. Möbelantrieb nach Anspruch 12, **dadurch gekennzeichnet, dass** die einer Zugeinheit zugeordneten Wikkelvorrichtungen (102, 104) drehsynchronisiert sind.

14. Elektromotorisch verstellbare Stützeinrichtung zum Abstützen einer Polsterung eines Sitz- und/oder Liegemöbels, insbesondere einer Matratze eines Bettes,
mit wenigstens zwei relativ zueinander verstellbaren Stützteilen,
wobei wenigstens ein zu verstellendes Stützteil einen ersten Längsholm und einen zweiten Längsholm aufweist, wobei die Längsholme quer zur Längsrichtung der Stützeinrichtung zueinander beabstandet sind,
**dadurch gekennzeichnet,**
**dass** die Stützeinrichtung wenigstens einen elektromotorischen Möbelantrieb nach einem Ansprüche 1 bis 13 aufweist und
**dass** ein erster der einer Zugeinheit zugeordneten Bowdenzüge (26) mit dem ersten Längsholm (12') und der zweite (24) der einer Zugeinheit zugeordneten Bowdenzüge mit dem zweiten Längsholm (12") in Kraftübertragungsverbindung steht zum Verstellen des ersten Stützteiles (12) relativ zu dem zweiten Stützteil (6).

15. Verwendung eines Möbelantriebes nach einem der Ansprüche 1 bis 13 zum Verstellen eines ersten Bauteiles, insbesondere Möbelbauteiles, relativ zu einem zweiten Bauteil, insbesondere Möbelbauteil, wobei die Zugseile der einer Zugeinheit zugeordneten Bowdenzüge an räumlich zueinander beabstandeten Stellen an dem ersten Bauteil festgelegt sind zum Verstellen desselben relativ zu dem zweiten Bauteil.

## Claims

1. Electric-motor furniture-drive-unit for adjusting parts of an item of furniture relative to one another,
with a drive-unit which comprises at least one electric motor (38) and is disposed in a driven connection with at least one traction unit,
wherein at least two Bowden wires (24, 26; 28, 30) are associated with each traction unit, of which the traction cables are each disposed in an active connection with the associated traction unit,
with a base body preferably constituted as a housing (22) in or on which the traction unit is accommodated,
wherein the traction cables are preferably guided or capable of being guided to the traction unit or respectively traction units through at least one recess (64, 66) in or on the base body and
wherein the sheaths of the Bowden wires are attached or capable of being attached to the base body.

2. Furniture drive-unit according to claim 1, **characterised in that** each traction unit comprises at least two traction elements, each of which is associated with a traction cable of a Bowden wire (24, 26).

3. Furniture drive-unit according to claim 2, **characterised in that** at least one traction element is movable in a linear manner in or on the housing (22).

4. Furniture drive-unit according to claim 3, **characterised in that** at least one guide for at least one traction element is integrated into the housing (22), especially formed into the housing (22) in one piece.

5. Furniture drive-unit according to claim 4, **characterised in that** the guide is a linear guide (68).

6. Furniture drive-unit according to one of the preceding claims, **characterised in that** the drive-unit comprises at least two electric motors (38, 38'), which are preferably capable of being driven independently of one another.

7. Furniture drive-unit according to one of the preceding claims, **characterised in that** at least one electric motor (38) is associated with each traction unit and is disposed in a driven connection with the same.

8. Furniture drive-unit according to one of the preceding claims, **characterised in that** the housing (22) is formed in such a manner that at least one electric motor (38) can be inserted into the housing (22) and is held in the inserted position in a form-fit manner by the housing (22).

9. Furniture drive-unit according to one of the preceding claims, **characterised in that** the drive-unit comprises at least one transmission unit (78), of which the components are arranged on a transmission holding part (76), especially held on the same,
wherein preferably at least one electric motor (38) is attached to the transmission holding part and forms with the transmission holding part (76) a motor/transmission component group and/or wherein the housing (22) is preferably formed in such a manner that the motor/transmission component group can be inserted into the housing (22) and is held in the inserted position in a form-fit manner by the housing (22).

10. Furniture drive-unit according to one of the preceding claims, **characterised in that** at least one end-position switch (70, 72) is associated with at least one traction element.

11. Furniture drive-unit according to one of claims 2 to 10, **characterised in that** at least one traction element is constituted as a winding device (102, 104) for the winding of a traction cable of a Bowden wire (24, 26).

12. Furniture drive-unit according to claim 11, **characterised in that** at least one traction unit comprises two winding devices (102, 104), of which one is associated with the one of the Bowden wires (24, 26) associated with the traction unit and the other is associated with the other one of the Bowden wires (24, 26) associated with the traction unit.

13. Furniture drive-unit according to claim 12, **characterised in that** the winding devices (102, 104) associated with a traction unit are rotationally synchronised.

14. Support device adjustable by electric motor for supporting a cushion of an item of furniture for sitting and/or lying, especially a mattress of a bed,
with at least two support parts adjustable relative to one another,
wherein at least one support part to be adjusted comprises a first longitudinal shaft and a second longitudinal shaft, wherein the longitudinal shafts are distanced from one another transversely to the longitudinal direction of the support device,
**characterised in that**
the support device comprises at least one electric-motor furniture drive-unit according to one of claims 1 to 13 and
that a first one of the Bowden wires (26) associated with a traction unit is disposed in a force-transmitting connection with the first longitudinal shaft (12'), and the second one (24) of the Bowden wires associated with a traction unit is disposed in a force-transmitting connection with the second longitudinal shaft (12") for the adjustment of the first support part (12) relative to the second support part (6).

15. Use of a furniture drive-unit according to one of claims 1 to 13 for the adjustment of a first structural component, especially furniture structural component, relative to a second structural component, especially furniture structural component, wherein the traction cables of the Bowden wires associated with a traction unit are attached to positions on the first structural component spatially distanced from one another for the adjustment of the same relative to the second structural component.

## Revendications

1. Mécanisme d'entraînement de meuble par moteur électrique pour le réglage de pièces d'un meuble les unes par rapport aux autres,
avec une unité d'entraînement qui présente au moins un moteur électrique (38) et qui est en relation d'entraînement avec au moins une unité de traction,
au moins deux câbles Bowden (24, 26 ; 28, 30) étant affectés à chaque unité de traction, dont les câbles de traction sont en liaison opératoire respectivement avec l'unité de traction affectée,
avec un corps de base constitué de préférence en tant que boîtier (22), dans lequel ou sur lequel l'unité de traction est logée,
les câbles de traction étant ou pouvant être guidés à travers au moins un creux (64, 66) dans ou sur le corps de base vers l'unité de traction ou respectivement vers les unités de traction, et
les gaines des câbles Bowden étant ou pouvant être immobilisées sur le corps de base.

2. Mécanisme d'entraînement de meuble selon la revendication 1, **caractérisé en ce que** chaque unité de traction présente au moins deux éléments de traction dont chacun est affecté à un câble de traction d'un câble Bowden (24, 26).

3. Mécanisme d'entraînement de meuble selon la revendication 2, **caractérisé en ce qu'**au moins un élément de traction est mobile linéairement dans ou sur le boîtier (22).

4. Mécanisme d'entraînement de meuble selon la revendication 3, **caractérisé en ce qu'**au moins un guidage pour au moins un élément de traction est intégré dans le boîtier (22), en particulier est formé d'une seule pièce dans le boîtier (22).

5. Mécanisme d'entraînement de meuble selon la revendication 4, **caractérisé en ce que** le guidage est un guidage linéaire (68).

6. Mécanisme d'entraînement de meuble selon l'une des revendications précédentes, **caractérisé en ce que** l'unité d'entraînement présente au moins deux moteurs électriques (38, 38') qui peuvent être commandés de préférence indépendamment l'un de l'autre.

7. Mécanisme d'entraînement de meuble selon l'une des revendications précédentes, **caractérisé en ce qu'**au moins un moteur électrique (38) est affecté à chaque unité de traction et est en relation d'entraînement avec celle-ci.

8. Mécanisme d'entraînement de meuble selon l'une des revendications précédentes, **caractérisé en ce que** le boîtier (22) est formé de telle sorte qu'au moins un moteur électrique (38) peut être inséré dans le boîtier (22) et est retenu dans la position d'insertion par liaison de forme par le boîtier (22).

9. Mécanisme d'entraînement de meuble selon l'une des revendications précédentes, **caractérisé en ce que** l'unité d'entraînement présente au moins une transmission (78) dont les composants sont disposés dans une partie de retenue de transmission (76), en particulier sont retenus sur cette dernière, au moins un moteur électrique (38) étant de préférence fixé sur la partie de retenue de transmission et formant avec la partie de retenue de transmission (76) un sous-ensemble moteur/transmission et/ou le boîtier (22) étant de préférence formé de telle sorte que le sous-ensemble moteur/transmission peut être inséré dans le boîtier (22) et est retenu dans la position d'insertion par liaison de forme par le boîtier (22).

10. Mécanisme d'entraînement de meuble selon l'une des revendications précédentes, **caractérisé en ce qu'**au moins un interrupteur de fin de course (70, 72) est affecté à un élément de traction.

11. Mécanisme d'entraînement de meuble selon l'une des revendications 2 à 10, **caractérisé en ce qu'**au moins un élément de traction est constitué en tant que dispositif d'enroulement (102, 104) pour l'enroulement du câble de traction d'un câble Bowden (24, 26).

12. Mécanisme d'entraînement de meuble selon la revendication 11, **caractérisé en ce qu'**au moins une unité de traction présente deux dispositifs d'enroulement (102, 104) dont l'un est affecté à l'un des câbles Bowden (24, 26) affectés à l'unité de traction et l'autre est affecté à l'autre des câbles Bowden (24, 26) affectés à l'unité de traction.

13. Mécanisme d'entraînement de meuble selon la revendication 12, **caractérisé en ce que** les dispositifs d'enroulement (102, 104) affectés à une unité de traction sont synchronisés en rotation.

14. Dispositif de soutien réglable par moteur électrique pour soutenir un rembourrage d'un mobilier d'assise ou de literie, en particulier d'un matelas d'un lit,
avec au moins deux parties de soutien réglables l'une par rapport à l'autre,
au moins une partie de soutien à régler présentant un premier longeron et un deuxième longeron, les longerons étant espacés l'un de l'autre transversalement à la direction longitudinale du dispositif de soutien,
**caractérisé en ce que**
le dispositif de soutien présente au moins un mécanisme d'entraînement de meuble par moteur électrique selon l'une des revendications 1 à 13, et
**en ce qu'**un premier des câbles Bowden (26) affectés à une unité de traction est en relation de transmission de force avec le premier longeron (12'), et le deuxième des câbles Bowden affectés à une unité de traction est en relation de transmission de force avec le deuxième longeron (12") pour le réglage de la première partie de soutien (12) par rapport à la deuxième partie de soutien (6).

15. Utilisation d'un mécanisme d'entraînement de meuble selon l'une des revendications 1 à 13 pour le réglage d'un premier élément de construction, en particulier d'un élément de construction de meuble, par rapport à un deuxième élément de construction, en particulier un élément de construction de meuble, les câbles de traction des câbles Bowden affectés à une unité de traction étant immobilisés sur des emplacements, espacés spatialement les uns des autres, sur le premier élément de construction pour le réglage de ce dernier par rapport au deuxième élément de construction.
